(19) Europäisches Patentamt
European Patent Office
Office européen des brevets

(11) EP 3 505 677 B1

(12) **EUROPEAN PATENT SPECIFICATION**

(45) Date of publication and mention of the grant of the patent:
**18.12.2024 Bulletin 2024/51**

(21) Application number: **17843529.3**

(22) Date of filing: **21.08.2017**

(51) International Patent Classification (IPC):
***D06M 13/292** (2006.01)* ***D04H 1/728** (2012.01)*
***D06M 15/21** (2006.01)* ***H01B 1/06** (2006.01)*
***H01M 8/02** (2016.01)* ***H01M 8/10** (2016.01)*
***H01M 8/1018** (2016.01)* ***H01M 8/1053** (2016.01)*
***H01M 8/106** (2016.01)* ***H01M 8/1062** (2016.01)*
***H01M 8/1069** (2016.01)* ***H01M 8/1086** (2016.01)*
***H01M 8/1088** (2016.01)*

(52) Cooperative Patent Classification (CPC):
**D04H 1/728; H01M 8/1018; D06M 13/292; D06M 15/21; H01B 1/06; H01M 8/1053; H01M 8/106; H01M 8/1062; H01M 8/1069; H01M 8/1086; H01M 8/1088;** H01M 2008/1095

(86) International application number:
**PCT/JP2017/029772**

(87) International publication number:
**WO 2018/038049 (01.03.2018 Gazette 2018/09)**

# (54) SURFACE-MODIFIED NANOFIBERS, ELECTROLYTE MEMBRANE, METHOD FOR PRODUCING ELECTROLYTE MEMBRANE, MEMBRANE ELECTRODE ASSEMBLY AND SOLID POLYMER FUEL CELL

OBERFLÄCHENMODIFIZIERTE NANOFASERN, ELEKTROLYTMEMBRAN, VERFAHREN ZUR HERSTELLUNG EINER ELEKTROLYTMEMBRAN, MEMBRANELEKTRODENANORDNUNG UND FESTPOLYMERBRENNSTOFFZELLE

NANOFIBRES MODIFIÉES EN SURFACE, MEMBRANE D'ÉLECTROLYTE, PROCÉDÉ DE PRODUCTION DE MEMBRANE D'ÉLECTROLYTE, ENSEMBLE D'ÉLECTRODE À MEMBRANE ET PILE À COMBUSTIBLE À POLYMÈRE SOLIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2016 JP 2016162455**

(43) Date of publication of application:
**03.07.2019 Bulletin 2019/27**

(73) Proprietor: **Tokyo Metropolitan Public University Corporation**
**Tokyo 163-0926 (JP)**

(72) Inventors:
- **KAWAKAMI Hiroyoshi**
  **Hachioji-shi**
  **Tokyo 192-0397 (JP)**
- **TANAKA Manabu**
  **Hachioji-shi**
  **Tokyo 192-0397 (JP)**
- **MAKINOUCHI Takahito**
  **Hachioji-shi**
  **Tokyo 192-0397 (JP)**

(74) Representative: **Vossius & Partner**
**Patentanwälte Rechtsanwälte mbB**
**Siebertstrasse 3**
**81675 München (DE)**

(56) References cited:
**JP-A- 2010 232 121** **JP-A- 2011 068 872**
**JP-A- 2012 238 590** **JP-A- 2012 238 590**
**JP-A- 2015 028 850** **JP-A- 2015 028 850**
**TW-A- 201 011 963**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 505 677 B1

## Description

[Technical Field]

The present invention relates to surface-modified nanofibers and an electrolyte membrane in which a matrix polymer is introduced into a nanofiber non-woven fabric, and more specifically relates to a polymer electrolyte membrane that is useful in a solid polymer fuel cell or the like.

[Background Art]

Composite membranes obtained by introducing a variety of substances into non-woven fabrics are used in a variety of fields, and in recent years, attention has been focused on composite membranes as electrolyte membranes used in solid polymer fuel cells.

Polymer electrolyte membranes have been proposed as electrolyte membranes used in solid polymer fuel cells, and fluorine-based electrolytes such as Nafion (registered trademark) are an example thereof. However, these fluorine-based electrolyte membranes exhibit lower proton conductivity under low humidification conditions, and therefore suffer from problems such as exhibiting poor power generation performance, undergoing membrane and catalyst deterioration as a result of secondary reactions caused by fuel gas permeation, exhibiting poor long-term stability with dimensional changes caused by low membrane strength, and involving high costs due to the use of fluorine.

Meanwhile, consideration has been given to development of hydrocarbon-based polymer electrolyte membranes that do not involve use of fluorine materials. There have been proposals to increase the number of sulfonic acid groups in hydrocarbon-based polymer electrolyte membranes in order to increase ion conductivity, and these proposals involve problems such as membranes readily deforming as a result of swelling by water, having low mechanical strength and difficulty in obtaining a membrane having excellent long-term stability.

As a result, a variety of developments have been carried out, and from these developments, sulfonated polyimides have been proposed as high performance electrolyte materials due to exhibiting high thermal stability and mechanical strength and excellent membrane formability (see PTL 1 to 4). However, these proposed sulfonated polyimides involved problems such as reduced ion conductivity under high temperature low humidification conditions, and a membrane obtained by blending a phosphoric acid-doped sulfonated polyimide with a polybenzimidazole has been proposed as a polymer electrolyte membrane which exhibits high ion conductivity across a broad temperature range and which exhibits excellent mechanical strength (see PTL 5).

This type of membrane has the characteristics of exhibiting high ion conductivity across a broad temperature range from a low temperature of approximately -20°C to a high temperature of approximately 120°C and exhibiting excellent ion conductivity even under low humidification conditions where little moisture is present in the membrane.

In recent years, however, there have been demands for polymer electrolyte membranes to exhibit high ion conductivity under non-humidified conditions, and membrane thicknesses have tended to decrease from the perspective of lowering membrane resistance. The blended membrane mentioned above has a rigid structure in the main chain, and therefore exhibits high mechanical strength, but is brittle, and therefore suffers from the problem of handling being difficult if the membrane is thin. In addition, gas permeation increases as the membrane thickness decreases, and because large amount of hydrogen peroxide is generated, oxidation stability is poor and the membrane is not stable over a long period of time.

As a result, PTL 6 proposes providing a composite membrane which exhibits high ion conductivity over a broad temperature and humidity range, exhibits excellent handleability even for a thin membrane and exhibits excellent long-term stability; and a method for producing the composite membrane.

[Citation List]

[Patent Literature]

[PTL 1] Japanese Patent Application Publication No. 2002-358978
[PTL 2] Japanese Patent Application Publication No. 2005-232236
[PTL 3] Japanese Patent Application Publication No. 2005-272666
[PTL 4] Japanese Patent Application Publication No. 2007-302741
[PTL 5] Japanese Patent Application Publication No. 2011-68872 [PTL 6]Japanese Patent Application Publication No. 2012-238590

JP 2015 028850 A discloses a surface modified nanofiber PBI fabric doped with phytic acid by immersion. The pores are filled with an ion conductive polymer matrix.

TW 201 011 963 A refers to a nanofiber, e.g. polysulfone or PEEK, whose surface is modified with acidic groups such as sulfonic, carboxylic or phosphonic groups, followed by spraying, coating, screen printing of a polymer with basic functional groups, such as amine groups, or a basic compound, such as chitosan. The pores of this nanofiber membrane are filled with a basic matrix polymer.

[Summary of Invention]

[Technical Problem]

However, since the time that PTL 6 was proposed, there have been demands for significantly thinner membranes, and specifically membranes having thicknesses of 20 μm or less. Achieving this type of membrane thickness brought about problems such as it not being possible to achieve satisfactory ion conductivity (proton conductivity) and difficulties in suppressing gas permeation.

That is, in composite membranes proposed in the past, it was difficult to achieve a balance between satisfactory ion conductivity (proton conductivity) and gas barrier properties in cases where membranes are made thinner in line with current requirements, and there is currently a need to develop a composite membrane which exhibits satisfactory ion conductivity (proton conductivity) and gas barrier properties in a thin membrane having a thickness of 20 μm or less.

Therefore, the purpose of the present invention is to provide novel nanofibers (surface-modified nanofibers) that constitute a composite electrolyte membrane and provide an electrolyte membrane which exhibits satisfactory ion conductivity (proton conductivity) and gas barrier properties in a thin membrane having a thickness of 20 μm or less.

[Solution to Problem]

The inventors of the present invention considered that the problem mentioned above could be solved by improving substances that constitute nanofibers that constitute a non-woven fabric and methods for producing the nanofibers. As a result of investigating a variety of substances, the inventors of the present invention found that the objectives mentioned above could be achieved by alternately layering acidic molecules that exhibit proton conductivity and basic molecules on polymer nanofibers so as to prepare surface-modified nanofibers, and filling voids in a composite nanofiber non-woven fabric with a matrix polymer, and thereby completed the present invention.

That is, the present invention provides a surface-modified nanofiber, an electrolyte membrane, a method for producing the membrane, a membrane electrode assembly and a solid polymer fuel cell as defined in the claims.

[Advantageous Effects of Invention]

The surface-modified nanofibers of the present invention exhibit superior characteristics to nanofibers used in composite membranes in the past, and an electrolyte membrane that contains these nanofibers exhibits satisfactory ion conductivity (proton conductivity), gas barrier properties and membrane strength even in cases where the thickness of the membrane is 20 μm or less.

[Brief Description of Drawings]

[Fig. 1]
Fig. 1 is a schematic diagram that schematically illustrates the surface-modified nanofibers of the present invention.
[Fig. 2]
Fig. 2 is a schematic diagram that schematically illustrates the surface-modified nanofibers of the present invention and a side surface of an electrolyte membrane that contains the nanofibers.
[Fig. 3]
Fig. 3 is a schematic diagram that schematically illustrates each step in a method for producing the surface-modified nanofibers of the present invention and a side surface of an electrolyte membrane that contains the nanofibers.
[Fig. 4]
Fig. 4 is a SEM photograph (a photograph in lieu of a drawing) of a non-woven fabric of surface-modified nanofibers (PBI nanofibers) obtained in Working Example 1 (not according to the claims).
[Fig. 5]
Fig. 5 is a SEM photograph (a photograph in lieu of a drawing) of a non-woven fabric of PBI nanofibers obtained in

Working Example 2 (not according to the claims), which have been subjected to single layer modification by an acidic substance.

[Fig. 6]

Fig. 6 is a SEM photograph (a photograph in lieu of a drawing) of a non-woven fabric of PBI nanofibers obtained in Working Example 3, which have been subjected to alternating three layer modification by an acidic substance and a basic substance.

[Fig. 7]

Fig. 7 is a SEM photograph (a photograph in lieu of a drawing) of a non-woven fabric of PBI nanofibers obtained in Working Example 4, which have been subjected to alternating five layer modification by an acidic substance and a basic substance.

[Reference Signs List]

| | |
|---|---|
| 1 | Non-woven fabric |
| 6 | Matrix polymer |
| 100 | Electrolyte membrane |
| 101 | Surface-modified nanofibers |
| 101A | Polymer nanofiber |
| 101B | Molecular modification site |

[Description of Embodiments]

The present invention will now be explained in greater detail.

[Surface-modified nanofibers]

First, the surface-modified nanofibers of the present invention will be explained.

The surface-modified nanofibers of the present invention comprise polymer nanofibers and molecular modification sites introduced at the surfaces of the polymer nanofibers. More specifically, the surface-modified nanofibers 101 comprise polymer nanofibers 101A and molecular modification sites 101B introduced at the surfaces of the polymer nanofibers, as shown in Fig. 1. Fig. 1 is shown in such a way that the molecular modification sites 101B are two layers, but the molecular modification sites may be layered as three or more layers. Up to five layers are preferred. Here, the layering is carried out in such a way that, for example, in cases where molecular modification sites of a first layer form acidic molecular modification sites through introduction of an acidic substance into polymer nanofibers, once this introduction treatment is complete, it is possible to form basic molecular modification sites in a second layer by further introducing a basic substance, as described later. By repeatedly carrying out the acidic substance introduction and the basic substance introduction in this way a desired number of times, it is possible to obtain the surface-modified nanofibers of the present invention, in which molecular modification sites are formed on the surfaces of polymer nanofibers as a prescribed number of layers (number of 101B in Fig. 1).

As described below, the electrolyte membrane of the present invention is characterized by having the surface-modified nanofibers, and is preferably such that a matrix polymer is present in such a way as to be in contact with the surface-modified nanofibers.

The constituent components of the constituent parts will now be explained.

<Constituent components>

(Polymer nanofibers)

In cases where the electrolyte membrane of the present invention described below is used as a polymer electrolyte membrane for a solid polymer fuel cell, the polymer nanofibers are a constituent part capable of holding molecular modification sites, which comprise an acidic substance and a basic substance and are introduced at the surfaces, on the surfaces and are parts that serve as a foundation for exhibiting the primary function of the electrode membrane by conducting protons. Furthermore, the polymer nanofibers are an important part for improving the mechanical strength and gas barrier properties of the electrolyte membrane, and thereby contributing to achieving a thinner membrane, by utilizing the excellent thermal, mechanical and chemical properties of the polymer nanofibers.

Constituent components that constitute the polymer nanofibers preferably contain repeating units containing

aromatic groups and/or aliphatic groups, have basic or acidic functional groups, which can interact with an acidic substance or a basic substance, in the main chain skeleton or in a side chain functional group, and have a sufficient molecular weight for the nanofibers to be provided using an electrospinning method.

That is, the polymer nanofibers used in the present invention preferably have the structures of PA), PB) and PC) below.

PA) Structures having a repeating unit that contains an aromatic group and/or an aliphatic group in the main chain.

PB) Structures having a plurality of basic or acidic functional groups, which can interact with an acidic substance or a basic substance, in the main chain skeleton or in a side chain functional group.

PC) Structures which are fibers formed using an electrospinning method and which have a fiber diameter of preferably 300 nm or less, and more preferably 100 to 250 nm. In order to achieve such a fiber diameter, the molecular weight of the constituent component of the polynanofibers is important, but because molecular weights differ according to the structure of the constituent component, explanations will be given for each type of structure. In addition, the aspect ratio of the polymer nanofibers is preferably 100 or more. Moreover, in cases where the polymer nanofibers are formed using an electrospinning method, the fiber diameter preferably falls within the range mentioned above, but in cases where a spinning method other than this is used, the fiber diameter may be different, and can be 1000 nm or less. In addition, the fiber diameter of the surface-modified nanofibers preferably falls within the range mentioned for the fiber diameter of the polymer nanofibers because these diameters differ only by the amount by which molecules are layered on the surface of the polymer nanofibers.

Here, "interaction" means not only the formation of ionic bonds and hydrogen bonds, but also includes the formation of covalent bonds and charge transfer complexes, hydrophobic interactions and ion exchange.

Examples of basic functional groups capable of interacting with acidic substances in the main chain skeleton of the polymer nanofibers include $-NH_2$ groups, >NH groups, >N-groups and =N- groups.

Examples of polymers having these basic functional groups include polybenzimidazoles (PBI), which have the structural formula shown below, polybenzoxazoles, polybenzothioazoles, polyindoles, polyquinolines, polyvinylimidazoles, polyallylamines and polyethyleneimines.

Of these, polybenzimidazoles are preferred due to having basic functional groups capable of interacting with acidic substances, exhibiting excellent thermal stability, mechanical characteristics and chemical stability, being able to improve the mechanical strength and heat resistance of an electrolyte membrane, exhibiting relatively good nanofiber-forming capability and being able to contribute to a reduction in thickness of an electrolyte membrane.

In addition, examples of acidic functional groups capable of interacting with basic substances in the main chain skeleton include sulfonylimide structures ($-S(=O)_2-NH-S(=O)_2-$).

In addition, examples of main chain skeletons in which basic or acidic functional groups can be introduced into a side chain include polyarylene ethers (PAE) shown below, polyimides (PI) shown below, polystyrene and copolymers thereof (PSt) shown below, polyphenylenes (PP), polyphenylene oxides (PPO), polyphenylene sulfides (SPPS) and polyvinyl derivatives and copolymers thereof (PV).

Examples of basic functional groups capable of interacting with acidic substances include secondary and tertiary nitrogen, such as amine derivatives, pyridine derivatives and imidazole derivatives, quaternary nitrogen such as ammonium group, pyridinium group and imidazolium group, and quaternary phosphorus and quaternary sulfur, such as phosphonium group and sulfonium group, and these can be introduced at arbitrary positions in the main chain skeleton.

Examples of acidic functional groups capable of interacting with basic substances include acid functional groups such as sulfonic acid groups, phosphonic acid groups and carboxylic acid groups, and these can be introduced at arbitrary positions in the main chain skeleton.

In addition, a commercially available product such as Nafion (registered trademark), which has a fluoroalkyl main chain and a fluoroalkylsulfonic acid group, can be used as the polymer nanofibers.

At the time of use, the polymer nanofibers can be used as nanofibers constituted from only one polymer having a structure mentioned above or as nanofibers comprising mixture of plurality of such polymers.

A preferred specific example of the polymer nanofibers is nanofibers comprising a compound (polymer) represented by the chemical formula below, or the like.

A polymer represented by

[C1]

Polybenzimidazole (PBI)

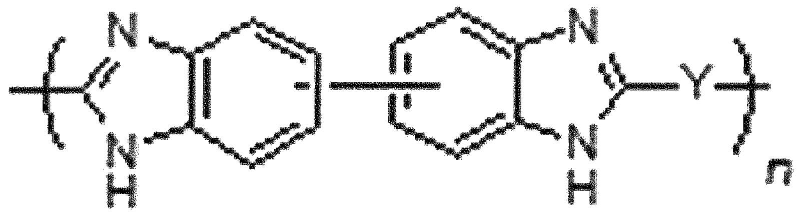

or

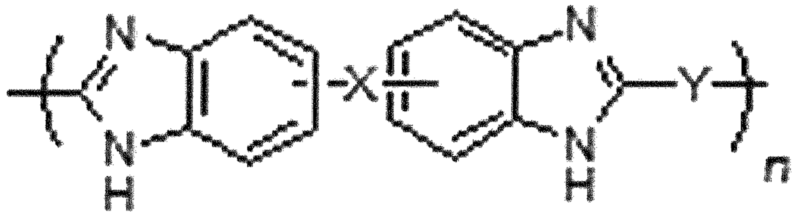

(In the formula, X is O, CO, $SO_2$, S, $CH_2$, $C(CH_3)_2$, $C(CF_3)_2$, or the like,
Y is a divalent group having at least one aromatic ring or aliphatic hydrocarbon, examples of which include an aromatic ring, such as a benzene ring or a naphthalene ring, or a nitrogen-containing heterocyclic ring, such as a pyridine ring, all of which may be substituted with a substituent group such as a hydroxyl group, an alkyl group or a sulfonic acid group, or a divalent group including benzene rings and the like, in which two benzene rings are linked by a direct bond, -O-, -CO-, $-SO_2-$, or the like,

n is preferably an integer between 2 and 5000, and more preferably an integer between 100 and 1000.)

The compound below can be given as a specific example of the PBI mentioned above.

[C2]

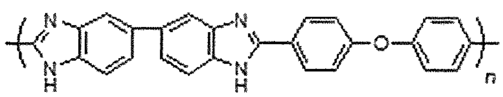

(n is as defined above.)

The PBI mentioned above can be produced in accordance with the production method disclosed in paragraphs 0018 to 0021 in Japanese Patent Application Publication No. 2012-238590.

In addition, the mass average molecular weight (Mw) of the polymer is preferably $5.0 \times 10^4$ to $1.0 \times 10^6$, and the value of Mw/Mn, which is the ratio of the mass average molecular weight (Mw) relative to the number average molecular weight (Mn), is preferably 1 to 5. By setting these ranges, it is possible to produce more uniform nanofibers.

The fiber diameter of the polymer nanofibers (and especially conjugated nanofibers obtained using two or more types of polymer) is preferably 500 nm or less from the perspectives of reducing the thickness of composite membranes and improving proton conductivity, and is more preferably 50 to 300 nm.

A method for producing this type of fiber is explained below.

[C3]

Polyarylene ether (PAE)

$$-(A-O-B-O)_n-(C-O-D-O)_m-$$

A, C:

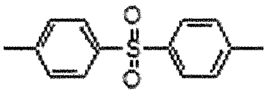

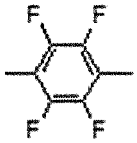

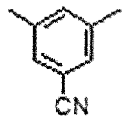

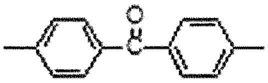

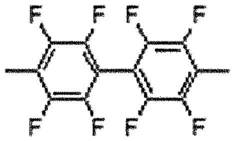

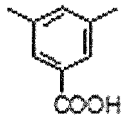

B, D:

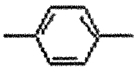

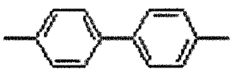

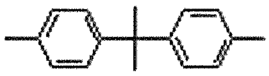

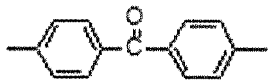

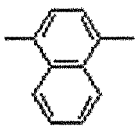

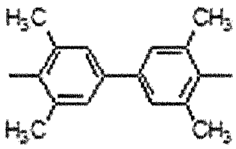

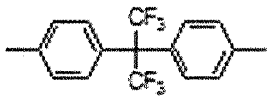

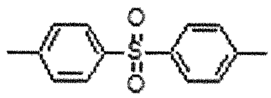

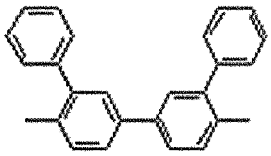

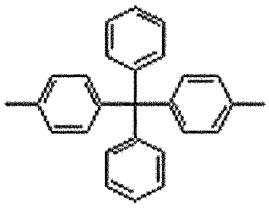

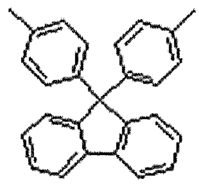

(In the formula, n is a number between 2 and 5000, and m is a number between 2 and 5000.)

[C4]

Polyimide (PI)

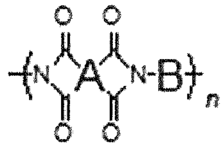

A:

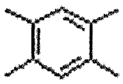
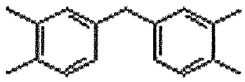
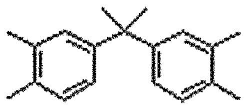
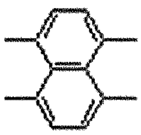
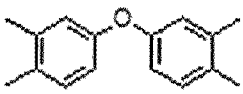
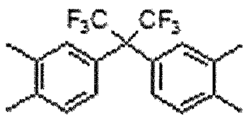
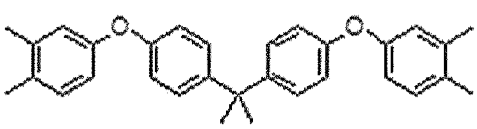
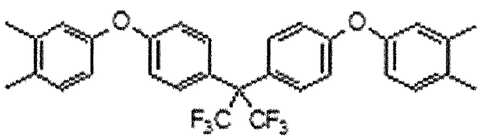

B:

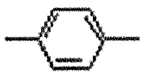
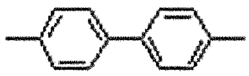
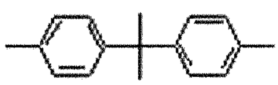
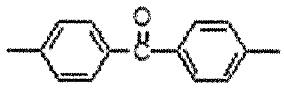
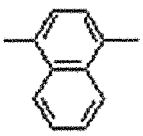
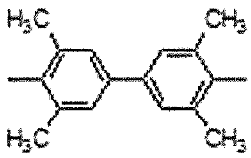
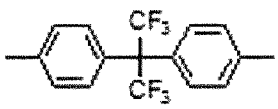
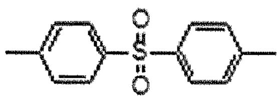
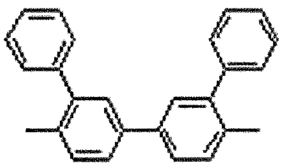
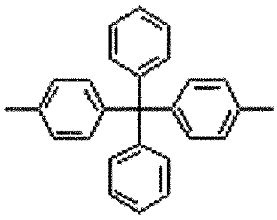
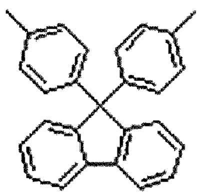

(In the formula, n is a number between 2 and 5000.)

[C5]

Polystyrene and copolymers thereof (PSt)

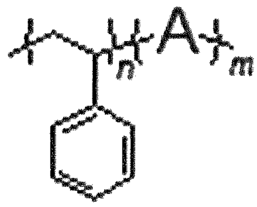

A:

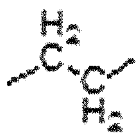
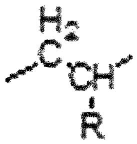
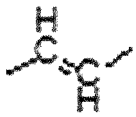
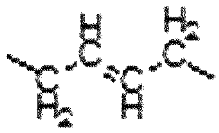

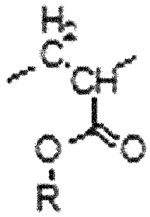
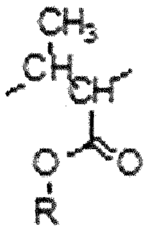
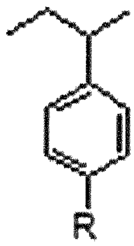

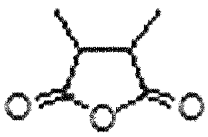
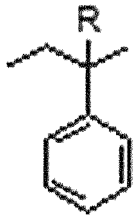
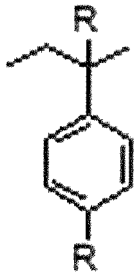

(In the formula, R denotes a straight chain or branched hydrocarbon group having 1 to 18 carbon atoms or a hydrocarbon group having a hydroxyl group or the like. (In the formula, n is a number between 2 and 5000, and m is a number between 2 and 5000.))

The polymer shown below can be given as an example of a sulfonated polyarylene ether (SPAE) in which a sulfonic acid group, which is an acidic functional group, is introduced into a side chain.

[C6]

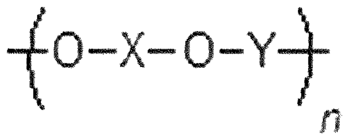

(In the formula, X and Y are each a divalent group having at least one aromatic ring, examples of which include an aromatic ring, such as a benzene ring or a naphthalene ring, or a nitrogen-containing heterocyclic ring, such as a pyridine ring, all of which may be substituted with a substituent group such as a hydroxyl group, an alkyl group or a sulfonic acid group, or a divalent group including benzene rings and the like, in which two benzene rings are linked by a direct bond, -O-, -CO-, $-SO_2-$, -S-, $-CH_2-$, $-C(CH_3)_2-$, $-C(CF_3)_2-$, or the like,

an aromatic ring in X and/or Y has at least one acid functional group such as a sulfonic acid group, a phosphonic acid group or a carboxylic acid group, and
n is preferably an integer between 2 and 5000, and more preferably an integer between 100 and 500.

Moreover, examples of a counter cation in the acid functional group include arbitrary types of cations such as protons, sodium, potassium, triethyl ammonium and imidazolium.)

In addition, it is possible to use a polymer having a block structure such as that shown below, in which an acid functional group can be locally introduced.

[C7]

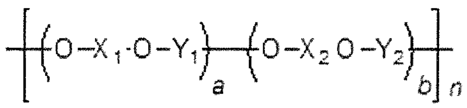

(In the formula, repeating units represented by a are hydrophilic parts,

$X_1$ is a divalent group having at least one aromatic ring, examples of which include an aromatic ring, such as a benzene ring or a naphthalene ring, or a nitrogen-containing heterocyclic ring, such as a pyridine ring, all of which may be substituted with a substituent group such as a hydroxyl group, an alkyl group or a sulfonic acid group, or a divalent group including benzene rings and the like, in which two benzene rings are linked by a direct bond, -O-, -CO-, $-SO_2-$, - S-, $-CH_2-$, $-C(CH_3)_2-$, $-C(CF_3)_2-$, or the like,

In the formula, $Y_1$ is also a divalent group having at least one aromatic ring, examples of which include an aromatic ring, such as a benzene ring or a naphthalene ring, or nitrogen-containing heterocyclic ring, such as a pyridine ring, all of which may be substituted with a substituent group such as a hydroxyl group, an alkyl group or a sulfonic acid group, or a divalent group including benzene rings and the like, in which two benzene rings are linked by a direct bond, -O-, -CO-, $-SO_2-$, -S-, $-CH_2-$, $-C(CH_3)_2-$, $-C(CF_3)_2-$, or the like,

an aromatic ring in $X_1$ and/or $Y_1$ has at least one acid functional group such as a sulfonic acid group, a phosphonic acid group or a carboxylic acid group, and preferably a plurality, such as 2 to 4, of these acid functional groups, and
a is preferably an integer between 1 and 500, and more preferably an integer between 4 and 50.)
(In the formula, repeating units represented by b are hydrophobic parts,
$X_1$ is a divalent group having at least one aromatic ring, examples of which include an aromatic ring, such as a benzene ring or a naphthalene ring, or a nitrogen-containing heterocyclic ring, such as a pyridine ring, all of which may be substituted with a substituent group such as an alkyl group or a fluoroalkyl group, or a divalent group including benzene rings and the like, in which two benzene rings are linked by a direct bond, -O-, -CO-, $-SO_2-$, -S-, $-CH_2-$, $-C(CH_3)_2-$, $-C(CF_3)_2-$, or the like,
$Y_1$ in the formula is also a divalent group having at least one aromatic ring, examples of which include an aromatic ring, such as a benzene ring or a naphthalene ring, or nitrogen-containing heterocyclic ring, such as a pyridine ring, all of which may be substituted with a substituent group such as an alkyl group or a fluoroalkyl group, or a divalent group including benzene rings and the like, in which two benzene rings are linked by a direct bond, -O-, -CO-, $-SO_2-$, -S-, $-CH_2-$, $-C(CH_3)_2-$, $-C(CF_3)_2-$, or the like,
aromatic rings in $X_1$ and $Y_1$ do not contain an acid functional group, and b is preferably an integer between 1 and 500, and more preferably an integer between 4 and 50.)

In addition, n is preferably an integer between 1 and 1000, more preferably an integer between 1 and 100, and particularly preferably an integer between 8 and 100.)

Furthermore, it is possible to use a polymer having a graft structure such as that shown below, in which a sulfonic acid group can be locally introduced.

[C8]

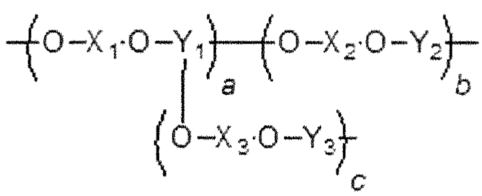

($X_1$, $Y_1$, $X_2$, $Y_2$, $X_3$ and $Y_3$ may be the same as, or different from, each other, and are each a divalent group having at least one aromatic ring, examples of which include an aromatic ring, such as a benzene ring or a naphthalene ring, or nitrogen-containing heterocyclic ring, such as a pyridine ring, all of which may be substituted with a substituent group such as a hydroxyl group, an alkyl group or a sulfonic acid group, or a divalent group including benzene rings and the like, in which two benzene rings are linked by a direct bond, -O-, -CO-, $-SO_2-$, -S-, $-CH_2-$, $-C(CH_3)_2-$, $-C(CF_3)_2-$, or the like,

an aromatic ring in $X_1$, $Y_1$, $X_2$, $Y_2$, $X_3$ or $Y_3$ has at least one acid functional group such as a sulfonic acid group, a phosphonic acid group or a carboxylic acid group, and preferably a plurality, such as 2 to 4, of these acid functional groups, and

a, b and c are each an integer between 1 and 500.

Moreover, repeating units represented by a and b may have the block structures mentioned above.)

Specifically, it is possible to use the polymers shown below.

[C9]

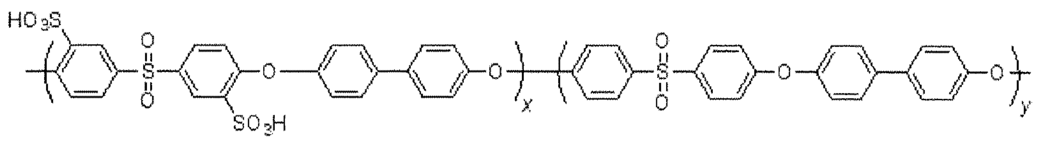

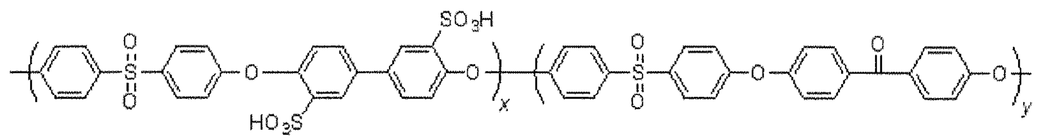

(x and y are each an integer between 1 and 1000.)

In the case of a sulfonated poly (arylene ether sulfone) (SPAES), the SPAE mentioned above can be obtained in the manner described below.

That is, in a nitrogen atmosphere and using a polymerization solvent such as N,N-dimethylacetamide and an azeotropic agent (toluene or the like), the SPAE can be obtained by adding 4,4'-bisfluorophenylsulfone-3,3'- sodium disulfonate, 4,4'-bisfluorophenylsulfone, 4,4'-biphenyl and potassium carbonate, stirring for 1 to 10 hours at a temperature 100°C or higher, and then further increasing the temperature and stirring for 1 to 10 hours.

Moreover, weight average molecular weight and degree of polymerization can be measured and calculated by means of GPC (gel permeation chromatography) using the method described below, and are values expressed in terms of polystyrene.

<Method for measuring molecular weight by GPC>

Using dimethylformamide (hereinafter abbreviated to "DMF"), to which a small quantity (10 mM) of LiBr had been added, the molecular weight of the synthesized polymer was measured in terms of polystyrene. A sample solution was prepared by dissolving the polymer at a concentration of 1 mg/ml in the lithium bromide-added DMF.

Meanwhile, examples of basic polymers include structures obtained by introducing a quaternary ammonium group, an imidazolium group, or the like, into the polyarylene ether (PAE) shown above, polyimide (PI) shown above, polystyrene or copolymer thereof (PSt) shown above, or the like. The compounds below can be given as specific examples. Synthesis methods for these are as disclosed in Japanese Patent Application Publication No. 2013-237942.

[C10]

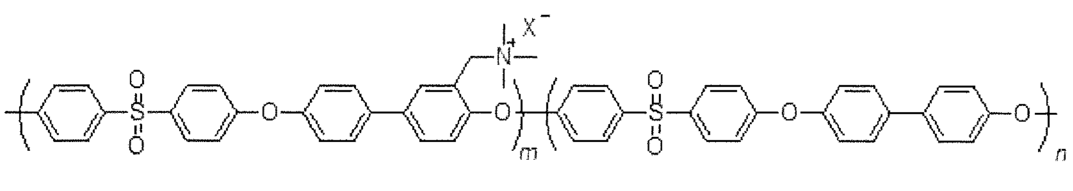

(X denotes Cl, Br, I, OH, $HCO_3$, or the like. m and n are each an integer between 1 and 2000.)

[C11]

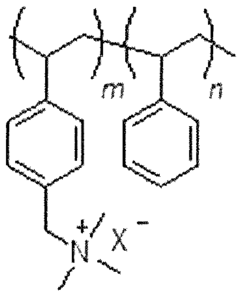

(X denotes Cl, Br, I, OH, $HCO_3$, or the like. m and n are each an integer between 1 and 10,000.)

As with the PBI, the mass average molecular weight (Mw) of the polymers exemplified above is preferably $5.0 \times 10^4$ to $1.0 \times 10^6$, and the value of Mw/Mn, which is the ratio of the mass average molecular weight (Mw) relative to the number average molecular weight (Mn), is preferably 1 to 5.

<Constituent components>

(Acidic substance constituting molecular modification site)

The acidic substance introduced into the polymer nanofibers is preferably introduced in cases where a constituent component of the polymer nanofibers is a polymer compound having basic functional groups.

In cases where the surface-modified nanofibers of the present invention are used as the electrolyte membrane of the present invention, the acidic substance is a substance for achieving the primary function of the electrode membrane by conducting protons.

The acidic substance is preferably a substance which can interact with basic functional groups contained in the polymer nanofibers and which can contribute to proton conductance as an acidic functional group. The acidic substance is preferably an acidic substance having two or more acid substituent groups (a substance having a structure selected from among the group of low molecular compounds and high molecular compounds having a plurality of acidic functional groups that exhibit proton conductivity). Here, examples of acid substituent groups include phosphoric acid groups, sulfonic acid groups, carboxylic acid groups, nitric acid groups, vinyl-based carboxylic acid groups and Lewis acid groups.

Examples of the acidic substance include polyphosphoric acid, phytic acid, polyvinylphosphonic acid, polyvinylsulfonic acid, naphthalenedisulfonic acid, oxalic acid, squaric acid, phosphotungstic acid and phosphomolybdic acid. Of these substances, phytic acid is preferred from the perspectives of having a relatively low viscosity in an aqueous solution despite having a relatively high molecular weight, having 6 phosphonic acid groups per molecule, thereby enabling acid-base interactions with basic functional groups and basic substances at many points at polymer nanofiber surfaces, and thereby being unlikely to elute in the presence of water.

By introducing the acidic substance into polymer nanofibers that are surface-modified using the basic substance described below, it is possible to obtain surface-modified nanofibers in which molecular modification sites are formed in multiple layers, as shown in Fig. 1. In cases where the acidic substance is water-soluble, by repeatedly washing with water following the surface modification, it is possible to remove acidic substance that has not interacted with the polymer nanofibers, and by subsequently bringing about interactions with a basic substance, it is possible to construct a surface-modified structure in which the acidic substance and the basic substance are alternately and multiply layered, and use of a water-soluble acidic substance is therefore preferred.

Moreover, in cases where a polymer is used as the acidic substance (hereinafter, this polymer is referred to as an acidic polymer), the acidic polymer needs to have a relatively low viscosity from the perspective of being able to reach voids in the polymer nanofibers. For example, by preparing a dilute solution containing 10 mass% or less of an acidic polymer having a weight average molecular weight of 10,000 or less and using this dilute solution for the introduction treatment, it is possible to use an acidic polymer as an acidic substance that facilitates modification of the nanofibers and facilitates removal of excess acidic polymer by washing.

As a substance able to be used in a final step following formation of a multilayer structure in a polymer nanofiber post-treatment, that is, under conditions whereby further layering of a basic substance does not occur, it is possible to use an acidic substance having only one acidic group in addition to a proton-conducting substance having two or more acidic groups able to be used in the electrolyte membrane of the present invention. For example, in addition to the acidic substances mentioned above, it is specifically possible to use phosphoric acid, methanephosphonic acid, sulfuric acid, methanesulfonic acid, benzenesulfonic acid, trifluoromethanesulfonic acid, sulfinic acid, formic acid, acetic acid, nitric

acid, hydrochloric acid, ascorbic acid, chromic acid, tetrafluoroboric acid, hexafluorophosphoric acid, or the like.

Moreover, molecular modification sites formed by the acidic substance are sites formed by interactions between the acidic substance and the basic functional group, and a specific example of a formation mode of a molecular modification site is a mode such as that shown below. For example, in cases where polymer nanofibers having a tertiary nitrogen-containing functional group as a basic functional group are used and combined with a compound having a phosphonic acid group, a sulfonic acid group, or the like, as an acidic substance, molecular modification sites are formed by "acid-base interactions", that is, by the tertiary nitrogen being protonated and forming a quaternary nitrogen and the acidic functional group forming an anion (a phosphonate or sulfonate), thereby forming a salt. Meanwhile, in cases where polymer nanofibers having a functional group having a quaternary nitrogen, quaternary sulfur or quaternary phosphorus as a basic functional group are used and combined with a compound having a phosphonic acid group, a sulfonic acid group, or the like, as an acidic substance, molecular modification sites are formed by "electrostatic interactions", that is, by a quaternary cation (a positive charge) and an acid anion (a negative charge) that separates in water being drawn to each other, and the proton ($H^+$) of the acid and the quaternary cation ($N^+$ or the like) undergoing interactions that bring about ion exchange.

<Constituent components>

(Basic substance constituting molecular modification site)

By subjecting the polymer nanofibers having acidic functional groups to a post-treatment, it is possible to modify nanofibers surfaces with a basic substance.

The basic substance introduced into the polymer nanofibers is preferably introduced in cases where the constituent component of the polymer nanofibers is a polymer compound having acidic functional groups.

In cases where the surface-modified nanofibers of the present invention are used as the electrolyte membrane of the present invention, the acidic substance is a substance for achieving the primary function of the electrode membrane by conducting protons, and even in cases where molecular modification sites are formed through introduction of a basic substance, it is preferable to have molecular modification sites formed using the acidic substance.

In cases where the composite membrane of the present invention is used as a polymer electrolyte membrane, the basic substance is a substance for exhibiting the primary functions of the electrode membrane, such as holding a higher amount of acidic substance for conducting protons at molecular modification sites at the surface, accelerating dissociation of protons from the acidic substance by acting as a proton accelerator, and exhibiting excellent water retention capacity under low humidity conditions as a result of the salt structure formed by acid-base interactions.

The basic substance is preferably a substance which can interact with acidic functional groups contained in the polymer nanofibers and which can interact with acidic functional groups as basic functional groups. The basic substance is preferably a basic substance having two or more basic substituent groups (a substance having a structure selected from among the group of low molecular compounds and high molecular compounds having a plurality of basic functional groups). Here, examples of basic functional groups include imidazole groups, oxazole groups, amino groups, pyrrole groups, ammonium groups, phosphonium groups and sulfonium groups.

Examples of the basic substance include polybenzimidazoles, polyvinylimidazoles, polyoxazoles, polyallylamines, polyethyleneimines, polypyrroles, polydiallyldimethylammonium, quaternary ammonium group-substituted polystyrenes, quaternary ammonium group-substituted polyarylene ethers, quaternary ammonium group-substituted polyphenylenes, quaternary ammonium group-substituted polyacrylates, quaternary phosphonium group-substituted polystyrenes, quaternary phosphonium group-substituted polyacrylates, quaternary sulfonium group-substituted polystyrenes and quaternary sulfonium group-substituted polyacrylates. Of these basic substances, polydiallyldimethylammonium are preferred from the perspectives of being water-soluble due to having a relatively high cation density, and having a plurality of ammonium groups per molecule, thereby enabling acid-base interactions with acidic functional groups and acidic substances at many points at polymer nanofiber surfaces, thereby being unlikely to elute in the presence of water.

Furthermore, the basic substance can be an amphoteric molecule into which acidic groups have been partially introduced. Examples of the amphoteric molecule type basic substance include polymers in which a propanesulfonic acid group is introduced into some basic functional groups, such as polyvinylimidazoles, polyallylamines and polyethyleneimines.

By introducing the basic substance into polymer nanofibers that are surface-modified using the acidic substance described above, it is possible to obtain surface-modified nanofibers in which molecular modification sites are formed in multiple layers, as shown in Fig. 1. In cases where the basic substance is water-soluble, by repeatedly washing with water following the surface modification, it is possible to remove the basic substance that has not interacted with the polymer nanofibers, and by subsequently bringing about interactions with an acidic substance, it is possible to construct a surface-modified structure in which the basic substance and the acidic substance are alternately and multiply layered, and use of a water-soluble basic substance is therefore preferred.

Moreover, in cases where a polymer is used as the basic substance (hereinafter, this polymer is referred to as a basic polymer), the basic polymer needs to have a relatively low viscosity from the perspective of being able to reach voids in the polymer nanofibers. For example, by preparing a dilute solution containing 10 mass% or less of a basic polymer having a weight average molecular weight of 10,000 or less, it is possible to use a basic polymer as a basic substance that facilitates modification of the nanofibers and facilitates removal of excess basic polymer by washing with water.

Moreover, molecular modification sites formed by the basic substance are sites formed by interactions between the basic substance and the acidic functional group, and a specific example of a formation mode of a molecular modification site is a mode such as that shown below. For example, in cases where a substance having a tertiary nitrogen-containing functional group as a basic functional group is used and combined with polymer nanofibers having acidic functional groups such as phosphonic acid groups or sulfonic acid groups, molecular modification sites are formed by "acid-base interactions", that is, by the tertiary nitrogen being protonated and forming a quaternary nitrogen and the acidic functional group forming an anion (a phosphonate or sulfonate), thereby forming a salt. Meanwhile, in cases where a substance having a functional group having a quaternary nitrogen, quaternary sulfur or quaternary phosphorus as a basic functional group is used and combined with polymer nanofibers having acidic functional groups such as phosphonic acid groups or sulfonic acid groups, molecular modification sites are formed by "electrostatic interactions", that is, by a quaternary cation (a positive charge) and an acid anion (a negative charge) that separates in water being drawn to each other, and the proton ($H^+$) of the acid and the quaternary cation ($N^+$ or the like) undergoing interactions that bring about ion exchange.

(Quantity ratios)

The molecular modification sites are present at a ratio of preferably 5 to 90 mass%, and more preferably 20 to 80 mass%, of the surface-modified nanofibers of the present invention because the polymer nanofibers and the molecular modification sites form a structure such as that mentioned above, meaning that proton conducting performance is achieved by making the amount of molecular modification sites present sufficiently high. If this ratio is less than 5 mass%, an improvement in proton conduction may be insufficient, and if this ratio exceeds 90 mass%, removal of non-interacted acidic or basic substance by washing may be insufficient and a variety of functions may deteriorate, and it is therefore particularly preferable for the ratio to fall within the range mentioned above.

<Constituent components>

(Matrix polymer)

The matrix polymer can improve membrane strength in cases where an electrolyte membrane is formed, and is preferably a polymer that also exhibits excellent proton conductivity, but can be a polymer compound that does not exhibit proton conductivity. This type of polymer compound that does not exhibit proton conductivity is a matrix that cannot be used in an electrolyte membrane obtained using a non-woven fabric comprising a polymer compound proposed in the past, but can be used in cases where the surface-modified nanofibers of the present invention are used because the surface-modified nanofibers exhibit good proton conductivity. In cases where this type of polymer compound that does not exhibit proton conductivity is used, gas barrier properties are further improved, a polymer compound having high strength can be selected, membrane strength can be further improved, and membrane thickness can be further reduced. The polymer that also exhibits excellent proton conductivity can be the sulfonated polyarylene ether (SPAE) mentioned above, a perfluorosulfonic acid polymer such as Nafion (registered trademark) shown below, the sulfonated polyimide (SPI) shown below, the sulfonated polybenzimidazole (SPBI) shown below, the sulfonated polyphenylene (SPP) shown below, the sulfonated polyphenylene oxide (SPPO) shown below, the polyphenylene sulfide (SPPS) shown below, the sulfonated polystyrene and copolymers thereof (SPSt) shown below, the polyvinylsulfonic acid and copolymers thereof (PVS) shown below, or the like. In addition, it is possible to use one of these in isolation or a mixture thereof at the time of use.

As an example of a representative perfluorosulfonic acid polymer, the structure of Nafion (registered trademark) products is given below.

[C12]

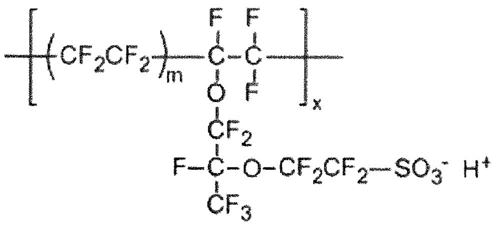

These are commercially available products, and the values of x and m in the formula vary from product to product, and it is possible to use a variety of Nafion products according to need.

The sulfonated polyimide (SPI) mentioned above can be any type of sulfonated polyimide, including sulfonated polyimides proposed in the past for constituting polymer electrolyte membranes. An example of a sulfonated polyimide able to be advantageously used in the present invention is a sulfonated polyimide represented by formula (2) below.

[C13]

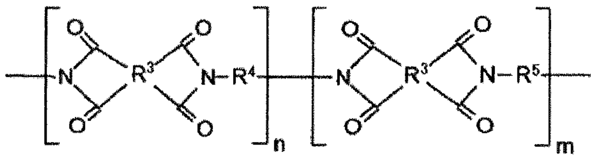

(2)

In formula (2) above, $R^3$ denotes a tetravalent group having at least one aromatic ring, preferred examples of which include a tetravalent aromatic residue such as a benzene ring or a naphthalene ring, a tetravalent aromatic residue of a compound in which two aromatic rings, such as benzene rings or naphthalene rings, are directly linked to each other, and a tetravalent residue of a compound in which two benzene rings are linked by a group such as $-C(CF_3)_2-$, $-SO_2-$ or $-CO_2-$, with a tetravalent residue of a compound having two aromatic rings being more preferred.

In addition, in formula (2), $R^4$ denotes a divalent group which has a sulfonic acid group and also has at least one aromatic ring, preferred examples of which include a divalent residue of a sulfonated aromatic compound in which two benzene rings are directly bonded to each other or linked by a group such as -O- or >$CR^6$ ($R^6$ forms a fluorene ring structure together with a carbon atom) and which has a sulfonic acid group in a benzene ring or in a substituent group on a benzene ring. Preferred examples of the substituent group on the benzene ring include an alkyl group, an alkyloxy group and a phenyl group.

Furthermore, in formula (2), $R^5$ denotes a divalent group which has at least one aromatic ring and has no sulfonic acid group, preferred examples of which include a divalent residue of a non-sulfonated compound which has a benzene ring or a heterocyclic ring, such as a nitrogen-containing heterocyclic ring, in the structure thereof. In addition, in formula (2), the value of n is 1 or more, and is preferably an integer of 50 or more, such as 50 to 2000, and the value of m is 0 or 1 or more, and is preferably an integer of 30 or more, such as 30 to 1000. More specifically, groups such as those shown below can be given as examples of $R^3$, $R^4$ and $R^5$.

[C14]

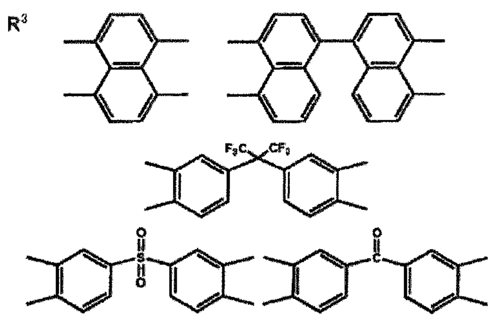

[C15]

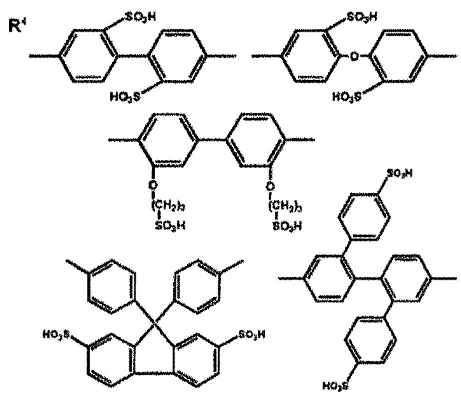

[C16]

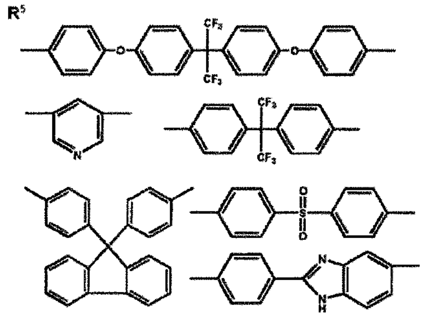

A sulfonated polyimide represented by formula (2) above, which can be used in the present invention, can be synthesized from, for example, an aromatic carboxylic acid dianhydride, a sulfonated aromatic diamine and, optionally, a non-sulfonated aromatic diamine monomer, as shown in the reaction formula below.

[C17]

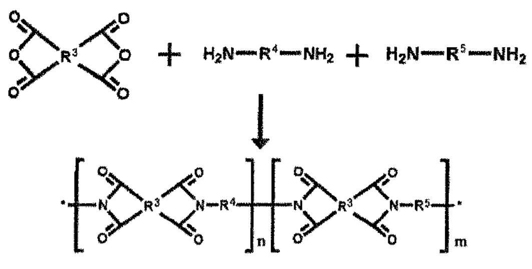

In the formula, $R^3$, $R^4$, $R^5$, n and m are as defined above.

Preferred examples of the aromatic carboxylic acid dianhydride include 1,4,5,8-naphthalenetetracarboxylic acid dianhydride, 2,2'-bis(3,4-dicarboxyphenyl)hexafluoropropane and 4,4'-bisbutyl-1,1',8,8'-tetracarboxylic acid dianhydride. Examples of the sulfonated aromatic diamine include main chain type monomers whose main chain has been modified by a sulfonic acid group and side chain type monomers in which a sulfonic acid group in a side chain has been modified. Preferred examples of the sulfonated aromatic diamine include 2,2-benzidine disulfonic acid, 4,4'-diaminophenyl ether disulfonic acid, 3,3'-bis(3-sulfopropoxy)benzidine, 9,9'-bis(4-aminophenyl)fluorene-2,7-disulfonic acid and 2,2'-bis(4-sulfophenyl)benzidine. Preferred examples of the non-sulfonated aromatic diamine include 4,4'-hexafluoroisopropylidene bis(p-phenyleneoxy)diamine, 2,2-diaminodiphenylhexafluoropropane, 9,9'-bis(4-aminophenyl)fluorene and 2,5-diaminopyridine. By using a non-sulfonated aromatic diamine monomer, it is possible to impart membrane stability and acid retention properties.

By using a combination of a sulfonated aromatic diamine monomer and a non-sulfonated aromatic diamine monomer, a sulfonated polyimide copolymer can be obtained, but the copolymer may be a random copolymer or a block

copolymer.

In the case of a copolymer, the ratio n/m of the sulfonated diamine monomer (n) and the non-sulfonated aromatic diamine monomer (m) is preferably between 30/70 and 100/0. If the value of n/m is less than 30/70, the proton conductivity of the composite membrane is low and it becomes difficult to obtain a suitable composite film. In order to achieve high proton conductivity, the value of n/m is preferably between 70/30 and 100/0.

The mass average molecular weight (Mw) of the sulfonated polyimide is preferably $1.0 \times 10^4$ to $1.0 \times 10^6$ from the perspective of membrane formability, and the value of Mw/Mn, which is the ratio of the mass average molecular weight (Mw) relative to the number average molecular weight (Mn), is preferably 1 to 5 from the perspective of strength.

(SPI)

In addition, the SPI mentioned above can be a compound having the block structure shown below.

[C18]

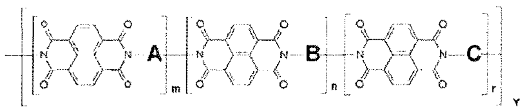

(1)

(In the formula, A denotes a sulfonic acid group-containing aromatic group having 6 to 30 carbon atoms, B denotes an aromatic group having 6 to 30 carbon atoms and having a sulfonic acid group-containing polyimide side chain, C denotes an optionally substituted aromatic group having 6 to 30 carbon atoms, m and n are each an integer of 1 or more, r is an integer that is 0 or 1 or more, and Y is a number of 1 or more. In addition, the value of m/(n+r) falls within the range 90/10 to 10/90, and this is a block polymer.)

The sulfonic acid group in group A above may be directly substituted on the aromatic group or introduced into a side chain via a $-O(CH_2)-$ group, a $-C_6H_4-$ (phenyl) group, a $-O-C_6H_4-$group, or the like. The aromatic group may be a benzene ring, a naphthalene ring, or the like, in isolation, but may also be a structure whereby two or more rings are directly bonded to each other or bonded via -O-, $-SO_2-$, a $-C(CF_3)_2-$ group, or the like.

Preferred examples of group A include the groups shown below.

[C19]

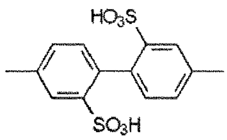
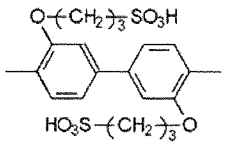
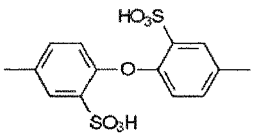
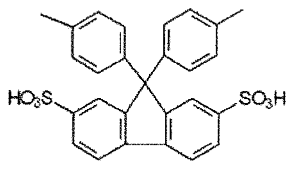
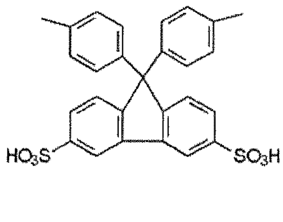
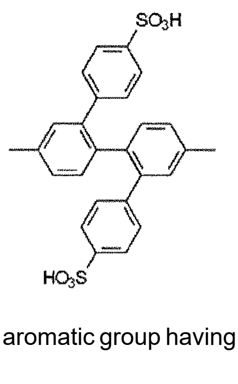

Meanwhile, as mentioned above, group B denotes an aromatic group having 6 to 30 carbon atoms and having a

sulfonic acid group-containing polyimide side chain, and group C denotes an optionally substituted aromatic group having 6 to 30 carbon atoms. The sulfonic acid group-containing polyimide side chain is linked to the aromatic group having 6 to 30 carbon atoms either directly or via -O-, -CO-, a -NH- group, or the like. In addition, examples of the substituent group in group C include groups such as -OH, -COOH and $-NH_2$. Preferred examples of group B, which is an aromatic group having 6 to 30 carbon atoms that includes a directly bonded portion or a -O-, -CO- or -NH- group, include the groups shown below, and preferred examples of group C, which is an optionally substituted aromatic group having 6 to 30 carbon

atoms, include groups in which group -D- is a group such as -H, -D-H or -D-OH in the groups shown below.

[C20]

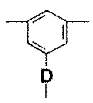
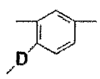
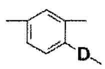
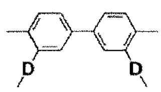
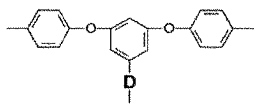

(In the formula, D is -O-, -CO-, -NH-, -CO-NH-, - CO(=O)- or a single bond.)

In addition, the SPI mentioned above can be a graft polymer obtained by introducing a group represented by formula (2) below into a polymer represented by formula (1) above. In such cases, the polymer represented by formula (1) above may be a random polymer or a block polymer, with a graft polymer being formed in the case of a random polymer and a block graft polymer being formed in the case of a block polymer.

[C21]

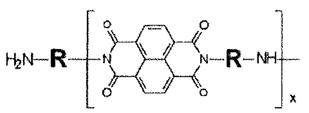 (2)

(In the formula, R denotes a sulfonic acid group-containing aromatic group having 6 to 30 carbon atoms, and x denotes an integer of 1 or more.)

Preferred examples of group R in formula (2) include the same groups as those listed for group A in formula (1) above. Group A and group R may be the same as, or different from, each other. The groups shown below are particularly preferred.

[C22]

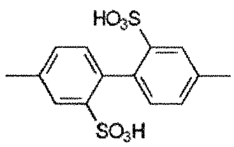

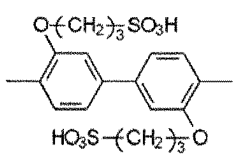

In addition, m and n+r are preferably integers between 1 and 100, the value of m/(n+r) is preferably within the range 90/10 to 10/90, and Y is preferably a number between 1 and 150. The weight average molecular weight (Mw) of the polyimide resin that constitutes the main chain is preferably 50,000 to 500,000. In addition, the weight average molecular weight (Mw) of the polyimide resin that constitutes a side chain is preferably 5000 to 500,000.

Furthermore, the ratio of the weight average molecular weight of a grafted side chain and the weight average molecular weight of the main chain is such that 0.01 < Mw (grafted side chain)/Mw (main chain) < 20, and the graft rate of the side chain polymer to the main chain polymer is preferably such that 1 < graft rate < 100.

Here, the graft rate is a ratio, calculated on the basis that a case in which side chains are introduced into all the side chain introduction sites in the main chain is 100%, and is calculated as [n/(n+r)] × 100. For example, in Working Examples 3 and 4 given below, the graft rate is 100% in cases where amide bonds are formed by amino groups at side chain part terminals prepared in Synthesis Example 3 reacting with all the carboxylic acid groups in DABA used in Synthesis Example 1 or 2. Specifically, the graft rate is calculated using the formula below.

IEC (ion exchange capacity) = sulfonic acid group equivalent weight × graft rate/(molecular weight of main chain unit - (molecular weight of side chain × graft rate)

thus

Graft rate (%) = {(molecular weight of main chain unit × IEC)/[sulfonic acid group equivalent weight - (molecular weight of side chain × IEC)]} × 100

The sulfonated polybenzimidazole (SPBI) mentioned above can be a polymer having the structures shown below.

[C23]

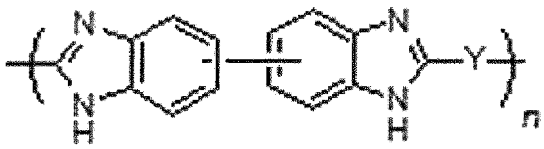

or

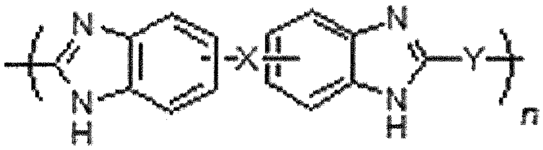

(In the formula, X is O, CO, $SO_2$, S, $CH_2$, $C(CH_3)_2$, $C(CF_3)_2$, or the like,

Y is a divalent group having at least one aromatic ring, examples of which include an aromatic ring, such as a benzene ring or a naphthalene ring, or a nitrogen-containing heterocyclic ring, such as a pyridine ring, each of which is substituted with at least one sulfonic acid group, or a divalent group including benzene rings and the like, in which two benzene rings are linked by a direct bond, -O-, -CO-, - $SO_2$-, or the like, and

n is preferably an integer between 2 and 5000, and more preferably an integer between 100 and 500.)

Specifically, it is possible to use a polymer shown below, or the like.

[C24]

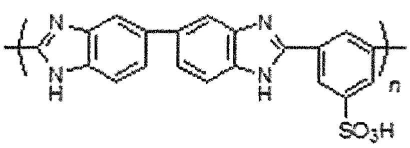

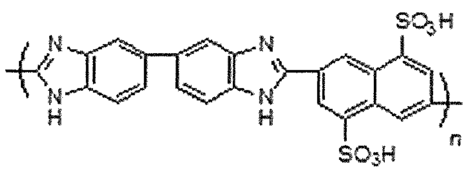

In the case of a disulfonated poly(benzimidazole), the SPBI mentioned above can be obtained in the manner described below.

That is, in a nitrogen atmosphere and using polyphosphoric acid as a solvent and condensing agent, 3,3'-diaminobenzidine and 4,8-disulfonyl-2,6-naphthalenedicarboxylic acid are added, stirring is carried out for 1 to 2 hours at a temperature of 80°C or higher, after which the temperature is increased, stirring is carried out for 8 to 10 hours at 200°C, the solution is added dropwise to water, and a precipitate can be obtained by washing with a 10 mass% aqueous solution of potassium hydroxide and recovering.

The polymer shown below can be given as an example of the sulfonated polyphenylene (SPP) mentioned above.

[C25]

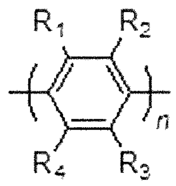

(n is as defined above.)

(In the formula, examples of $R_1$, $R_2$, $R_3$ and $R_4$ include hydrogen groups, alkyl groups, hydroxyl groups, sulfonic acid groups, monovalent groups having an aromatic ring, divalent groups in which a plurality of aromatic rings are linked, aromatic rings, such as benzene rings and naphthalene rings, and nitrogen-containing heterocyclic rings, such as pyridine rings, all of which are substituted with sulfonic acid groups and the like, and monovalent and divalent groups including benzene rings and the like, in which two benzene rings are linked by a direct bond, -O-, -CO-, $-SO_2-$, or the like, and n denotes an integer between 1 and 5000.)

Specifically, it is possible to use a polymer shown below.

[C26]

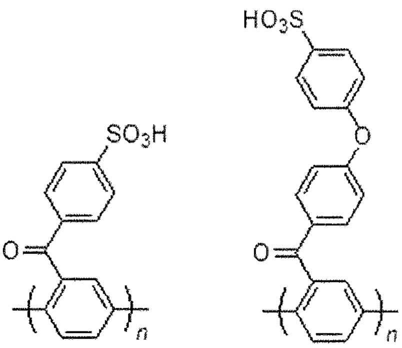

(n is as defined above.)

The polymer shown below can be given as an example of the sulfonated polyphenylene oxide (SPPO) mentioned above.

[C27]

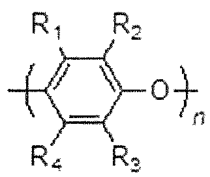

(In the formula, examples of $R_1$, $R_2$, $R_3$ and $R_4$ include hydrogen groups, alkyl groups, hydroxyl groups, sulfonic acid groups, monovalent groups having an aromatic ring, divalent groups in which a plurality of aromatic rings are linked, aromatic rings, such as benzene rings and naphthalene rings, and nitrogen-containing heterocyclic rings, such as pyridine

rings, all of which are substituted with sulfonic acid groups and the like, and monovalent and divalent groups including benzene rings and the like, in which two benzene rings are linked by a direct bond, -O-, -CO-, $-SO_2-$, or the like, and n denotes an integer between 1 and 5000.)

Specifically, it is possible to use the polymer shown below.

[C28]

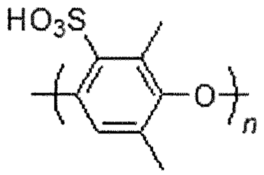

(n is as defined above.)

(SPPS)

The polymer shown below can be given as an example of the polyphenylene sulfide (SPPS) mentioned above.

[C29]

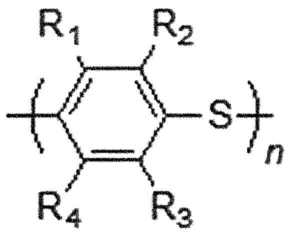

(In the formula, examples of $R_1$, $R_2$, $R_3$ and $R_4$ include hydrogen groups, alkyl groups, hydroxyl groups, sulfonic acid groups, monovalent groups having an aromatic ring, divalent groups in which a plurality of aromatic rings are linked, aromatic rings, such as benzene rings and naphthalene rings, and nitrogen-containing heterocyclic rings, such as pyridine rings, all of which are substituted with sulfonic acid groups and the like, and monovalent and divalent groups including benzene rings and the like, in which two benzene rings are linked by a direct bond, -O-, -CO-, $-SO_2-$, or the like, and n denotes an integer between 1 and 5000.)

Specifically, it is possible to use the polymer shown below.

[C30]

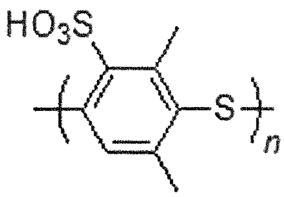

(n is as defined above.)

The polymer shown below can be given as an example of the sulfonated polystyrene and copolymer thereof (SPSt) mentioned above.

[C31]

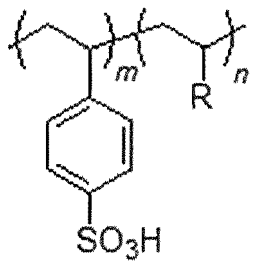

(R is alkyl, alkyl ester, an aromatic ring such as benzene, or the like, and includes vinyl monomers in general that can be copolymerized with styrene, sulfonated styrene or a sulfonated ester-substituted styrene, and m and n each denote an integer between 1 and 10,000.)

The polymer shown below can be given as an example of the polyvinylsulfonic acid and copolymer thereof (PVS) mentioned above.

[C32]

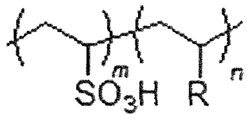

(R is alkyl, alkyl ester, an aromatic ring such as benzene, or the like, and includes vinyl monomers in general that can be copolymerized with vinylsulfonic acid or a vinylsulfonic acid ester, and m and n each denote an integer between 1 and 10,000.)

<Electrolyte membrane>

(Overall constitution)

The electrolyte membrane of the present invention contains the surface-modified nanofibers of the present invention, the ratio of the surface-modified nanofibers present satisfies the quantity ratio mentioned below, and the thickness of the electrolyte membrane is 30 μm or less, more preferably 2 to 30 μm, and most preferably 2 to 10 μm. If the thickness falls within this range, it is possible to achieve the type of thickness required in recent years.

In explaining the electrolyte membrane of the present invention with reference to Fig. 2, the electrolyte membrane 100 has a non-woven fabric layer 1 comprising surface-modified nanofibers (a layer in which the nanofibers are present in the form of an entangled non-woven fabric), and a matrix polymer (not shown due to being difficult to understand) is filled so as to be embedded in spaces between surface-modified nanofibers in the non-woven fabric layer 1.

Furthermore, in the electrolyte membrane of the present invention, by modifying polymer nanofibers having an acidic substance or a basic substance at fiber surfaces with an acidic substance having a plurality of acidic functional groups or a basic substance having a plurality of basic functional groups in a nanofiber post-treatment, that is, in a surface modification step, not only does a situation occur in which the acidic substance or the basic substance interacts with basic or acidic functional groups at two or more places at polymer nanofiber surfaces, but a type of crosslinked structure is also formed by a plurality of surface-modified nanofibers being bound at two or more places.

By forming this type of crosslinked structure, it is possible to form a strong non-woven fabric structure at membrane thicknesses thinner than those achieved in the past, and because an acidic substance capable of proton conduction is bound to the surface-modified nanofibers, this is advantageous in terms of proton conduction performance.

In the non-woven fabric layer 1 formed from the surface-modified nanofibers, it is preferable for the porosity of the non-woven fabric per se to be 10% to 90% before the matrix polymer is filled from the perspectives of proton conductivity and membrane strength and gas barrier properties when a composite membrane is formed. In particular, use of a material obtained by forming polymer nanofibers having the fiber diameter mentioned above into a non-woven fabric at a porosity within this range is preferred from the perspective of achieving the desired effect of the present invention. Porosity measurements are described below.

Here, as explained in the production method below, a non-woven fabric is first produced from polymer nanofibers, a matrix polymer is then introduced into a surface-modified nanofiber non-woven fabric obtained following a subsequent

surface modification step, and the non-woven fabric is immersed in a solution of the matrix polymer and formed into a desired shape, but the porosity is the proportion of spaces present between surface-modified nanofibers in the non-woven fabric prior to immersion in this solution. That is, the porosity is the ratio of the spaces relative to the volume of a virtual object that circumscribes the non-woven fabric, and is represented by (total volume of spaces/volume of virtual object) × 100.

(Quantity ratios)

The ratio of the matrix polymer present relative to the electrolyte membrane as a whole is sufficient at a quantity whereby voids present between surface-modified nanofibers present at the porosity mentioned above are embedded and the external shape of a composite membrane is formed, but in cases where the total amount of the surface-modified nanofibers is taken to be 100, this ratio is preferably 9 to 90 mass%, more preferably 10 to 90 mass%, and most preferably 20 to 90 mass%. If this ratio is less than 5 mass%, filling of nanofiber voids by the matrix polymer is insufficient, which can lead to a deterioration in proton conductivity and gas barrier properties, and if this ratio exceeds 90 mass%, the advantageous effect of the surface-modified nanofibers is not sufficiently exhibited. In the present invention where molecular modification sites are introduced as a plurality of layers, as shown in Fig. 1, the amount of molecular modification sites introduced into each layer can be arbitrarily specified, but in the case of a structure having three or more layers, for example, it is possible to form layers of molecular modification sites such that the amount introduced is 2 to 15 mass% in the first layer, 1 to 10 mass% in the second layer and 0.2 to 10 mass% in the third and subsequent layers.

(Other components)

In addition to the components mentioned above, a variety of additives can be added to the electrolyte membrane of the present invention as long as the gist of the present invention is not impaired. For example, inorganic particles such as silica particles may be incorporated in order to improve the mechanical characteristics of the composite membrane. The particle diameter of the inorganic particles is preferably 1 nm to 1 μm from the perspective of maintaining homogeneity, and is more preferably 100 nm or less, and further preferably 20 nm or less.

<Production method>

A method for producing the electrolyte membrane of the present invention will now be explained.

The production method of the present invention is preferably a method for producing the electrolyte membrane of the present invention, which is described above, and as shown in Fig. 3, can be implemented by carrying out:

- a step for forming a non-woven fabric comprising the polymer nanofibers (A in Fig. 3),
- a step for subjecting the non-woven fabric to a surface modification treatment so as to obtain a non-woven fabric comprising the surface-modified nanofibers of the present invention (B in Fig. 3),
- a step for filling a matrix polymer in voids in the non-woven fabric and integrating the surface-modified nanofibers and the matrix polymer (C in Fig. 3), and
- a step for post-treating the electrolyte membrane that contains surface-modified nanofibers (not shown).

More detailed explanations will now be given.

(Step for forming non-woven fabric, Fig. 3A)

In the step for forming a non-woven fabric, a non-woven fabric can be formed by dissolving a polymer that is a raw material for the polymer nanofibers in a solvent so as to obtain a spinning dope, and discharging the spinning dope onto a collector 30 using a discharging machine 10.

Production of non-woven fabrics of ultrafine fibers using a discharging machine is disclosed in, for example, Japanese Patent Application Publication Nos. 2003-73964, 2004-238749 and 2005-194675. An explanation will now be given using the production method disclosed in Japanese Patent Application Publication No. 2005-194675 as an example.

The discharging machine 10 shown in Fig. 3 has a nozzle 11 for discharging a spinning dope and a tank 12 for housing the spinning dope. In addition, the discharging machine has an earthed collector 30 that faces the nozzle 11. Therefore, by forming an electric field between the nozzle 11 and the collector 30 by means of a voltage application device (not shown), fibers that are formed by being discharged from the nozzle 11 and elongated by the electric field fly towards the collector 30 and accumulate on the collector 30, thereby forming a non-woven fabric 1 comprising polymer nanofibers.

Examples of the solvent include dimethylsulfoxide (DMSO), N,N-dimethylformamide (DMF), N,N-dimethylacetamide (DMAc) and N-methyl-2-pyrrolidone (NMP), and the concentration of the raw material polymer is preferably 1 to 30

mass%, and more preferably 5 to 20 mass%. The viscosity of the spinning dope is preferably 100 to 10,000 mPa·s, and more preferably 500 to 5000 mPa·s.

By using the apparatus mentioned above, the spinning dope is discharged from the nozzle 11 towards the collector 30, subjected to elongation by the electric field between the earthed collector 30 and the nozzle 11, which is applied by the voltage application device, and flies towards the collector 30 while being formed into a fiber (this is a so-called static spinning method). In addition, the flown fiber accumulates directly on the collector 30 and forms the non-woven fabric. Moreover, the spinning dope is supplied to the nozzle 11 from the tank 12 by means of, for example, a syringe pump, a tube pump, a dispenser, or the like. In addition, for details regarding the apparatus used for the spinning, see disclosures in paragraphs 0047 to 0056 in Japanese Patent Application Publication No. 2012-238590 as appropriate.

The thickness of the thus obtained non-woven fabric is preferably less than 30 μm from the perspective of reducing the thickness of the composite membrane as a whole, and is more preferably 5 μm or less.

(Step for subjecting non-woven fabric to surface modification treatment so as to obtain non-woven fabric comprising surface-modified nanofibers of present invention, Fig. 3B)

By next carrying out the present step, surface-modified nanofibers of the present invention are obtained in the form of a non-woven fabric by subjecting the obtained non-woven fabric to a surface modification treatment. In the present invention, the polymer nanofiber post-treatment is characterized by carrying out the surface modification treatment step prior to a step for contacting with a matrix. Due to this configuration, the acidic substance that is responsible for proton conduction and the basic substance that improves the modification amount and advantageous effect of the acidic substance are adsorbed on the polymer nanofibers by means of chemical interactions, excess acidic substance and basic substance proton conductors, which readily dissolve without undergoing interactions, can be removed, and it is possible to achieve a balance between membrane thickness reduction, gas barrier properties and high conductance (and especially gas barrier properties).

As shown in B in Fig. 3, the surface modification treatment can be carried out by placing the obtained non-woven fabric in some type of container 40, pouring a solution containing an acidic substance or a basic substance from a separate pouring container 50 into the container 40, immersing the non-woven fabric in the solution for a certain period of time, and then washing with a solvent such as pure water. During this process, a solution containing an acidic substance is used in cases where the polymer nanofibers have basic functional groups, and a solution containing a basic substance is used in cases where the polymer nanofibers have acidic functional groups.

The concentration of the acidic substance-containing solution falls within a range whereby the viscosity of the solution is not excessively high, that is, within a range of 500 mPa·s or less, and is 0.5 to 70 mass%, and preferably 1 to 50 mass%. Preferred immersion conditions are a temperature of 15°C to 80°C for a period of 0.25 to 3 hours. The concentration of the basic substance-containing solution falls within a range whereby the viscosity of the solution is not excessively high, that is, within a range of 500 mPa·s or less, and is 0.5 to 70 mass%, and preferably 1 to 50 mass%. Preferred immersion conditions are a temperature of 15°C to 80°C for a period of 0.25 to 3 hours.

Next, following completion of each immersion, it is preferable to wash the non-woven fabric in order to remove excess acidic substance or basic substance. In particular, in the electrolyte membrane of the present invention described above, because an acidic substance or a basic substance is bound to polymer nanofibers, as mentioned above, it is preferable to remove unbound excess acidic substance or basic substance from the perspectives of membrane strength and gas barrier properties and from the perspective of preventing catalyst poisoning in cases where the electrolyte membrane is used as a polymer electrolyte membrane for a fuel cell, and even if the acidic substance or the basic substance is removed, problems do not occur because sufficient proton conductivity is exhibited due to the presence of molecular modification sites at bound surfaces. The washing is preferably carried out for a period of 0.25 to 24 hours at a temperature of 15°C to 80°C using a washing liquid such as water.

The surface modification amount of the acidic substance and the basic substance (the amount adsorbed on the polymer nanofibers) can be calculated by measuring the change in mass of the non-woven fabric before and after the surface modification treatment or by measuring the ion exchange capacity. In order to measure a change in weight, it is preferable to wash off excess acidic substance or basic substance and then sufficiently dry the non-woven fabric by means of a vacuum drying for a period of 5 to 24 hours at a temperature of 50°C to 150°C.

In addition to the acidic substances having two or more acid functional groups mentioned above, an acidic substance having only one acid functional group can be used as an acidic substance able to be used in the present step. For example, in cases where nitric acid or the like, which has one acid functional group, is used, the acidic substance is used so that a counter ion of an acidic functional group in an acidic substance present in an acidic polymer or molecular modification site that constitutes the polymer nanofibers undergoes ion exchange into a proton form or used in order to neutralize a basic functional group in a basic substance present in a basic polymer or molecular modification site that constitutes the polymer nanofibers. Many acidic substances having only one acid functional group that does not undergo chemical interactions with polymer nanofibers can be removed using this washing procedure.

**According** to the present invention the present step is repeatedly carried out. For example, in cases where the polymer nanofibers have acidic functional groups and a surface modification treatment is first carried out so that surface

modification by a basic substance occurs and basic molecular modification sites are formed, by again carrying out the surface modification treatment mentioned above using an acidic substance-containing solution, it is possible to introduce layered molecular modification sites, as mentioned above. Meanwhile, in cases where the polymer nanofibers have basic functional groups and a surface modification treatment is first carried out so that surface modification by an acidic substance occurs and acidic molecular modification sites are formed, by again carrying out the surface modification treatment mentioned above using a basic substance-containing solution, it is possible to introduce layered molecular modification sites, as mentioned above.

By repeatedly carrying out the present step alternately with an acidic substance and a basic substance in the manner described above, a non-woven fabric comprising the surface-modified nanofibers of the present invention is obtained, in which molecular modification sites are formed as a desired number of layers.

(Step for filling matrix polymer in voids in non-woven fabric and integrating surface-modified nanofibers and matrix polymer, Fig. 3C)

In this step, the non-woven fabric comprising surface-modified nanofibers obtained in the previous step is placed in a container 40', a solution of a matrix polymer is poured from a separate pouring container 50' into the container 40', and the non-woven fabric is immersed in this solution.

Solvents able to be used in the matrix polymer solution vary according to the type of matrix polymer being used, but examples thereof include water, methanol, ethanol, 2-propanol, dimethylsulfoxide (DMSO), N,N-dimethylformamide (DMF), N,N-dimethylacetamide (DMAc) and N-methyl-2-pyrrolidone (NMP), and these may be used in combination with other solvents. In addition, the concentration of the matrix polymer in the solution is preferably 2 to 20 mass%.

The electrolyte membrane of the present invention can be obtained by attaining an immersed state and then evaporating of the solvent. The solvent can be evaporated off by, for example, natural drying at a temperature of 15°C to 150°C, vacuum drying or treating in a hot air current type oven for a period 1 to 48 hours.

In addition, it is also possible to form a salt from the matrix polymer and then treat as a solution in order to stabilize the polymer, but in such cases, it is preferable to acid-treat the electrolyte membrane obtained after completely evaporating of the solvent.

(Step for post-treating electrolyte membrane containing surface-modified nanofibers)

By subjecting the obtained electrolyte membrane containing surface-treated nanofibers to a post-treatment, advantageous effects can be expected, such as removal of residual solvents and low molecular weight substances, exchanging counter ions of acid functional groups into protons, making the membrane more compact, and improving stability and gas barrier properties.

Post-treatments mainly comprise solution treatments and heat treatments. Examples of substances able to be used in solution treatments include an aqueous solution of hydrogen peroxide, an aqueous solution of hydrochloric acid, an aqueous solution of nitric acid, a mixed solution of ethanol and hydrochloric acid, and a mixed solution of ethanol and nitric acid. Following completion of a solution treatment, it is possible to carry out a heat treatment by carrying out vacuum drying for a period of 1 to 48 hours at a temperature of 50°C to 150°C.

<Modes of use and advantages>

The electrolyte membrane of the present invention can be used as a polymer electrolyte membrane of a solid polymer fuel cell, in a state whereby the electrolyte membrane is held between a positive electrode and a negative electrode. That is, the electrolyte membrane of the present invention can be used in an membrane electrode assembly for a solid polymer fuel cell, and also in a solid polymer fuel cell. The electrolyte membrane of the present invention is a thin membrane, as mentioned above, and can stably conduct protons generated by a negative electrode to a positive electrode.

This type of polymer electrolyte requires low membrane resistance (membrane resistance ($\Omega \cdot cm^2$) = membrane thickness (cm)/proton conductance (s/cm):s = $1/\Omega$), but the electrolyte membrane of the present invention exhibits excellent membrane resistance (for example 0.58 $\Omega \cdot cm^2$) especially under conditions of high temperature and low humidity (80°C, 30% RH).

In addition, high gas barrier properties, that is, low gas permeation flow ($O_2$: <$1.3 \times 10^{-9}$ ($cm^3/(cm^2$ sec kPa)) at 80°C 95% RH), are also required. Moreover, high membrane stability (chemical, mechanical and thermal stability) are required, and the electrolyte membrane of the present invention achieves better performance as a thin membrane than conventional thick membranes.

It is not clear why the electrolyte membrane of the present invention is a well-balanced composite membrane which has lower membrane resistance even as a thinner membrane and also exhibits high gas barrier properties in comparison with conventional composite membranes, but the following reasons have been considered.

By modifying the surfaces of polymer nanofibers with an acidic substance and a basic substance, it is possible to incorporate a large amount of the acidic substance at polymer fiber surfaces. Furthermore, some acid functional groups interact with a basic polymer and facilitate dissociation of protons, and water retention capacity is improved through salt

formation. This advantageous effect is particularly prominent under low humidification conditions, under which proton dissociation was difficult and proton conductivity deteriorated in the past. That is, it can be said that molecular modification sites at surfaces have effective proton conduction pathways even under low humidification conditions. In other words, in the present invention, it is preferable for at least one layer to have a molecular modification site formed from an acidic substance as the molecular modification site mentioned above.

In addition, by modifying the polymer nanofibers with an acidic substance having two or more acid functional groups or a basic substance, these molecular modification sites are present in such a way as to link polymer nanofibers to each other. Therefore, when the polymer nanofibers are integrated with the matrix polymer, spaces between surface-modified nanofibers having pathways capable of effective proton conduction are unlikely to expand, and continuous proton conduction pathways are readily formed. It is thought that by linking surface-modified nanofibers to each other, protons can migrate through molecular modification sites at nanofiber surfaces, meaning that proton conduction performance is improved in the membrane thickness direction also. Furthermore, the polymer nanofibers per se form a dense structure derived from orientation of polymer chains inside the nanofibers, and exhibit excellent mechanical strength and gas barrier properties. It is thought that the strength and gas barrier properties of the electrolyte membrane are improved by the presence of these nanofibers in the electrolyte membrane.

Thus the constituted electrolyte membrane of the present invention not only achieves the advantageous effect of the excellent performance balance mentioned above, but can also greatly suppress a deterioration in characteristics because no free acidic substance or basic substance is present and poisoning of a platinum catalyst by the acidic substance or the basic substance in a fuel cell does not occur. Moreover, by compressing the non-woven fabric by means of hot pressing or the like, it is possible to increase the density of ultrafine fibers and greatly reduce the thickness of the membrane.

## Working Examples

The present invention will now be explained in greater detail through the use of working examples and comparative examples, but the present invention is not limited to these.

### <<Synthesis Example 1: Synthesis of polybenzimidazole (PBI)>>

In a nitrogen atmosphere and using polyphosphoric acid (PPA) as a polymerization solvent, a polybenzimidazole was synthesized by weighing out 2.27 g (10.6 mmol) of 3,3'-diaminobenzidine (DAB) and 2.73 g (10.6 mmol) of 4,4'-oxybisbenzoic acid (OBBA), adding polyphosphoric acid (PPA) so as to obtain a 3 mass% solution, slowly increasing the temperature while stirring, and stirring for 12 hours at 140°C. The obtained polymer solution was poured into ion exchanged water and reprecipitated, and the precipitate was neutralized with a sodium hydroxide solution and washed. The polybenzimidazole was recovered by means of suction filtration, allowed to dry naturally for 24 hours, and then vacuum dried at 100°C.

The polybenzimidazole was subjected to $^1$H-NMR spectral measurements using an NMR apparatus (product name "Bruker AVANCE III 500" available from Bruker BioSpin). It could be confirmed from $^1$H-NMR spectra that a PBI, which was the target polymer, had been obtained.

The molecular weight of the polybenzimidazole was measured using gel permeation chromatography (GPC, HPLC Pump PU-2080 PLUS available from JASCO Corporation). Moreover, using DMF, to which a small quantity (10 mmol/L) of lithium bromide had been added, as a GPC solvent, the molecular weight in terms of polystyrene was measured from a 1 mg/mL polybenzimidazole solution, which was prepared using a carrier. The results showed that the Mw value was $1.6 \times 10^5$ and the Mw/Mn value was 2.1.

### <<Working Example 1: Preparation of PBI nanofiber non-woven fabric>> - not according to the claims

Anhydrous N,N-dimethylformamide (DMF) was added so that the polymer weight was 8 mass%. A polymer solution was prepared by flushing a vial with nitrogen and stirring overnight so as to dissolve the polymer. An aluminum foil was disposed on a collector part of an electrospinning apparatus (product name "ES-2000S" available from Fuence Co., Ltd.), a syringe filled with the polymer solution was set on the electrospinning apparatus, and electrospinning was carried out at a polymer solution discharge rate of 0.12 mL/hour (step A shown in Fig. 3). The distance between the syringe and the collector was 10 cm, and a voltage of 30 kV was applied to the syringe. Due to this configuration, a PBI nanofiber non-woven fabric was layered on the aluminum foil. The layered product was then vacuum dried for 15 hours at 60°C.

A part of the nanofiber non-woven fabric was coated with osmium and observed using a scanning electron microscope (SEM, JSM-6100 available from JEOL Ltd.), and the fiber diameter of the produced nanofibers was calculated from the obtained SEM image. Fig. 4 shows a SEM image of the nanofibers of Working Example 1. In view of the SEM image, the fiber diameter of the produced nanofibers was 248±44 nm.

Porosity was determined by cutting the fiber non-woven fabric to a square measuring 3 cm on each side and calculating using the formula below using the dry mass (W), the apparent volume (V), which was calculated from the thickness measured using a thickness meter, and the specific gravity of the PBI (1.5 g/cm$^3$).

$$\text{Porosity (\%)} = (1-(W/(V \times 1.5)) \times 100$$

The calculated porosity was approximately 90%.

<<Working Example 2: Single layer modification of PBI nanofiber non-woven fabric by acidic substance (phytic acid) >> - not according to the claims

The PBI nanofiber non-woven fabric obtained in Working Example 1 was modified by an acidic substance. The PBI nanofibers were immersed for 1 hour at room temperature in a (50 wt%) aqueous solution of phytic acid and then repeatedly washed for 24 hours with pure water at 80°C so as to remove undoped phytic acid (step B shown in Fig. 3). The phytic acid-modified nanofibers were vacuum dried for 15 hours at 60°C. By carrying out this treatment, it was possible to modify the non-woven fabric with only phytic acid, which effects an acid-base interaction with basic polymer nanofibers. It was understood from the change in weight of the nanofibers before and after the surface modification that the ratio of molecular modification sites relative to the surface-modified nanofibers as a whole was 7.4 mass%.

Fig. 5 shows a SEM image of the nanofibers of Working Example 2. SEM image results confirm that a uniform nanofiber shape was maintained, and the diameter of these fibers was 276±49 nm. The porosity was approximately 89%.

<<Working Example 3: Alternating three layer modification of PBI nanofiber non-woven fabric by acidic substance (phytic acid) and basic substance (polydiallyldimethylammonium)>>

A non-woven fabric of the PBI nanofibers obtained in Working Example 2, which were modified using phytic acid as molecular modification sites (the surface-modified nanofibers of the present invention, sometimes referred to as phytic acid-modified PBI nanofibers hereinafter) were subjected to the same step as in Working Example 2 using a basic substance and then to the same step as in Working Example 2 using an acidic substance so as to introduce one layer of each type of molecular modification site. The treatment involved immersing the phytic acid-modified PBI nanofibers in a 1 wt% aqueous solution of poly(diallyl dimethyl ammonium chloride) for 1 hour at room temperature and then repeatedly washing for 24 hours with pure water at 80°C so as to remove unmodified basic substance. The basic substance-modified nanofibers were vacuum dried for 15 hours at 60°C. By carrying out this post-treatment, it was possible to modify the nanofibers with only a basic substance, which effects an acid-base interaction with acidic polymer nanofibers.

Furthermore, the obtained basic substance-modified nanofibers were immersed for 1 hour at room temperature in a 50 wt% aqueous solution of phytic acid and then repeatedly washed for 24 hours with pure water at 80°C so as to remove undoped phytic acid. The phytic acid-modified nanofibers were vacuum dried for 15 hours at 60°C. By carrying out this post-treatment, it was possible to modify the nanofibers with only phytic acid, which effects an acid-base interaction with basic polymer nanofibers, and an alternating three layer-modified nanofiber non-woven fabric was obtained. It was understood from the change in weight of the nanofibers before and after the surface modification that the ratio of molecular modification sites at the surface relative to the alternating three layer-modified nanofibers as a whole (the weight percentage of the amount of molecular modification sites introduced into the surface-modified nanofiber non-woven fabric) was 12.5 mass%. From these results, it was clear that a higher quantity of acidic substance could be introduced than in the case of single layer modification.

Fig. 6 shows a SEM image of the nanofibers of Working Example 3. SEM image results confirm that a uniform nanofiber shape was maintained, and the diameter of these fibers was 277±52 nm. The porosity was approximately 88%.

<<Working Example 4: Alternating five layer modification of PBI nanofiber non-woven fabric by acidic substance (phytic acid) and basic substance (polydiallyldimethylammonium)>>

The nanofiber non-woven fabric obtained in Working Example 3, which was subjected to alternating three layer modification by an acidic substance and a basic substance, was subjected to further modification by one layer of the basic substance and one layer of the acidic substance, using the same method as in Working Example 3.

From the change in weight of the nanofibers before and after the surface modification, it was estimated that the ratio of molecular modification sites at the surface relative to the alternating five layer-modified nanofibers as a whole (the weight percentage of the amount of molecular modification sites introduced into the surface-modified nanofiber non-woven fabric) was estimated to be 13.2 mass%, and it became clear that it was possible to modify the nanofibers with a higher amount of acidic substance than in the case of single layer modification.

Fig. 7 shows a SEM image of the nanofibers of Working Example 4. SEM image results confirm that a uniform

nanofiber shape was maintained, and the diameter of these fibers was 308±68 nm. The porosity was approximately 87%.

<<Working Example 5: Preparation of electrolyte membrane comprising non-woven fabric of nanofibers subjected to alternating three layer modification by acidic substance and basic substance/Nafion (registered trademark), and measurement of proton conductance>>

The PBI nanofiber non-woven fabric obtained in Working Example 3, which had a thickness of approximately 25 μm and had been subjected to alternating three layer modification by an acidic substance and a basic substance, was placed in a glass Petri dish, a commercially available Nafion (registered trademark) dispersion liquid was cast on the non-woven fabric, and the solvent was allowed to evaporate slowly at room temperature under atmospheric pressure (step C in FIG. 3). The mass ratio of the PBI nanofiber non-woven fabric that had been subjected to alternating three layer modification by an acidic substance and a basic substance and the Nafion was set to be 12/88 in view of porosity and specific gravity. An electrolyte membrane was then obtained by vacuum drying at 60°C for 15 hours.

An electrolyte membrane comprising non-woven fabric of nanofibers subjected to alternating three layer modification/Nafion was obtained by washing the obtained electrolyte membrane with pure water and, as a post-treatment, immersing the electrolyte membrane in nitric acid (1 M) at 80°C for 1 hour and repeatedly washing with pure water.

The thickness of the prepared composite electrolyte membrane was 26.6 μm, which was almost the same as the thickness of the non-woven fabric.

Proton conductance measurements were carried out by maintaining a constant temperature and humidity using a thermo-hygrostat (product name "SH-221" available from ESPEC Corp.), measuring frequency response properties from 50 kHz to 5 MHz using an impedance analyzer (product name "3532-50" available from Hioki E.E. Corporation), and calculating proton conductance from the resistance of the electrolyte membrane comprising non-woven fabric of nanofibers subjected to alternating three layer modification/Nafion. The proton conductance values at 80°C-30% RH and 80°C-95% RH were calculated to be $4.6 \times 10^{-3}$ and $1.0 \times 10^{-1}$ $Scm^{-1}$ respectively. The results are shown in Table 1. In particular, excellent proton conductivity was exhibited under the required conditions of low humidity mentioned above.

In comparison with Comparative Examples 1 to 3 explained below, it is clear that superior proton conductivity is achieved by subjecting a surface to alternating multilayer modification using an acidic substance and a basic substance.

<<Comparative Example 1: Preparation of membrane comprising only Nafion (registered trademark) containing no nanofibers, and measurement of proton conductance>>

Membrane preparation and post-treatment were carried out in the same way as in Working Example 5 using only a commercially available Nafion (registered trademark) dispersion liquid, without using a nanofiber mat, and the obtained membrane comprising only Nafion was subjected to proton conductance measurements. These results are shown in Table 1. The proton conductance values at 80°C-30% RH and 80°C-95% RH were $5.0 \times 10^{-4}$ and $1.0 \times 10^{-1}$ $Scm^{-1}$ respectively.

Proton conductivity was lower by a factor of ten under low humidity condition compared to Working Example 5, which was clearly inferior.

<<Comparative Example 2: Preparation of electrolyte membrane comprising unmodified nanofiber non-woven fabric/ Nafion, and measurement of proton conductance>>

An electrolyte membrane comprising a non-woven fabric of nanofibers subjected to single layer modification/-Nafion was obtained by carrying out membrane preparation and post-treatment using the same procedure as in Working Example 5, using the PBI nanofiber non-woven fabric obtained in Working Example 1, which had been subjected to single layer modification by an acidic substance and had a thickness of approximately 25 μm. The mass ratio of the PBI nanofiber non-woven fabric and the Nafion was set to be 10/90 in view of porosity and specific gravity. The thickness of the prepared composite electrolyte membrane was approximately 25 μm, which was almost the same as the thickness of the non-woven fabric.

Proton conductance was calculated in the same way as in Working Example 5. The proton conductance values at 80°C-30% RH and 80°C-95% RH were $6.0 \times 10^{-4}$ and $4.5 \times 10^{-2}$ respectively. The results are shown in Table 1.

Proton conductivity under conditions of low humidity was superior to Comparative Example 1, but lower than in Working Example 5.

<<Comparative Example 3: Preparation of electrolyte membrane comprising non-woven fabric of nanofibers subjected to single layer modification by acidic substance/Nafion, and measurement of proton conductances

The mass ratio of the PBI nanofiber non-woven fabric obtained in Working Example 2, which had been subjected

to single layer modification by an acidic substance, and the Nafion was set to be 11/89 in view of porosity and specific gravity.

An electrolyte membrane comprising a non-woven fabric of nanofibers subjected to single layer modification/-Nafion was obtained using the same procedure as in Working Example 5, using the PBI nanofiber non-woven fabric obtained in Working Example 2, which had been subjected to single layer modification by an acidic substance and had a thickness of approximately 25 μm. The thickness of the prepared composite electrolyte membrane was approximately 25 μm, which was almost the same as the thickness of the non-woven fabric.

Proton conductance was calculated in the same way as in Working Example 5. The proton conductance values at 80°C-30% RH and 80°C-95% RH were $2.5 \times 10^{-3}$ and $7.1 \times 10^{-2}$ respectively. The results are shown in Table 1. Proton conductivity was superior to Comparative Examples 1 and 2, but lower than in Working Example 5.

[Table 1]

| | Sample type | PBI nanofiber/surface molecular modification site /Nafion (wt%/wt%/wt%) | Proton conductance (S/cm) |
|---|---|---|---|
| Working Example 5 | Electrolyte membrane comprising non-woven fabric of PBI nanofibers subjected to alternating three layer modification by acidic substance and basic substance/Nafion | 10/2/88 | $1.0 \times 10^{-1}$ (80°C, 95% RH) $4.6 \times 10^{-3}$ (80°C, 30% RH) |
| Comparative Example 1 | Nafion-only membrane (membrane containing no nanofibers) | 0/0/100 | $1.0 \times 10^{-1}$ (80°C, 95% RH) $5.0 \times 10^{-4}$ (80°C, 30% RH) |
| Comparative Example 2 | Composite membrane comprising unmodified PBI nanofibers/Nafion | 10/0/90 | $4.5 \times 10^{-2}$ (80°C, 95% RH) $6.0 \times 10^{-4}$ (80°C, 30° RH) |
| Comparative Example 3 | Composite membrane comprising PBI nanofibers subjected to single layer modification by acidic substance/Nafion | 10/1/89 | $7.1 \times 10^{-2}$ (80°C, 95% RH) $2.5 \times 10^{-3}$ (80°C, 30% RH) |

## Claims

**1.** A surface-modified nanofiber comprising:
a molecular modification site on the surface of a polymer nanofiber,

and which is **characterized in that**
the molecular modification site exhibits proton conductivity and
the molecular modification site has features A), B) and C) below,

A) The molecular modification site has a functional group that can interact with a polymer nanofiber;
B) The molecular modification site is composed from an acidic substance and a basic substance;
C) The acidic substance and the basic substance comprise an alternating layered structure.

**2.** The surface-modified nanofiber according to claim 1, which is **characterized in that**

the acidic substance has a structure selected from among the groups of low molecular weight compounds and high molecular weight compounds having a plurality of acidic functional groups that exhibit proton conductivity, and
the basic substance has a structure selected from among the groups of low molecular weight compounds and high molecular weight compounds having a plurality of basic functional groups.

**3.** The surface-modified nanofiber according to claim 2, which is **characterized in that**

the acidic functional group, which exhibits proton conductivity, is a sulfonic acid group, a phosphonic acid group or a carboxylic acid group, and
the basic functional group is a group having a tertiary nitrogen, a quaternary nitrogen, a quaternary phosphorus or a quaternary sulfur, wherein the quaternary sulfur-containing group is a sulfonium group.

**4.** The surface-modified nanofiber according to claim 3, which is **characterized in that** the tertiary nitrogen-containing group is an amine derivative, a pyridine derivative or an imidazole derivative, the quaternary nitrogen-containing group is an ammonium group, a pyridinium group or an imidazolium group, and the quaternary phosphorus-containing group is a phosphonium group.

**5.** The surface-modified nanofiber according to any one of claims 1 to 4, which is **characterized in that**

the molecular modification site on the surface is present at a ratio of 5 to 90 mass% in the overall surface-modified nanofiber, and
the surface-modified nanofiber has a fiber diameter of 1000 nm or less wherein the fiber diameter is measured as described in the description.

**6.** An electrolyte membrane which contains the surface-modified nanofiber according to any one of claims 1 to 5, and which is **characterized in that**

the surface-modified nanofiber is present at a ratio of 10 to 90 mass% in the overall electrolyte membrane, and has a thickness of 30 $\mu$m or less.

**7.** A method for producing an electrolyte membrane according to claim 6, the method including

a step for forming a non-woven fabric comprising a polymer nanofiber,
a step for subjecting the non-woven fabric to a surface modification treatment to obtain a non-woven fabric comprising surface-modified nanofibers by repeatedly carrying out the surface modification treatment alternately with an acidic substance and a basic substance, wherein forming molecular modification sites as a desired number of layers,
a step for integrating the surface-modified nanofiber and a matrix polymer by filling the pores of the non-woven fabric with the matrix polymer to obtain a matrix polymer-filled non-woven fabric, and
a step for subjecting the obtained matrix polymer-filled non-woven fabric to a post-treatment.

**8.** A membrane electrode assembly for a solid polymer fuel cell, which is **characterized by** containing the electrolyte membrane according to claim 6.

**9.** A solid polymer fuel cell, which is **characterized by** containing the membrane electrode assembly according to claim 8.

## Patentansprüche

**1.** Eine oberflächenmodifizierte Nanofaser, umfassend:

eine molekulare Modifikationsstelle auf der Oberfläche einer Polymer-Nanofaser,
und die **dadurch gekennzeichnet ist, dass**
die molekulare Modifikationsstelle Protonenleitfähigkeit aufweist und
die molekulare Modifikationsstelle die nachstehenden Merkmale A), B) und C) aufweist,

A) die molekulare Modifikationsstelle weist eine funktionelle Gruppe auf, die mit einer Polymer-Nanofaser wechselwirken kann;
B) die molekulare Modifikationsstelle besteht aus einer sauren Substanz und einer basischen Substanz;
C) die saure Substanz und die basische Substanz umfassen eine alternierende Schichtstruktur.

**2.** Die oberflächenmodifizierte Nanofaser nach Anspruch 1, welche **dadurch gekennzeichnet ist, dass**

die saure Substanz eine Struktur aufweist, die aus den Gruppen von Verbindungen mit niedrigem Molekulargewicht und Verbindungen mit hohem Molekulargewicht mit einer Mehrzahl an sauren funktionellen Gruppen, die Protonenleitfähigkeit aufweisen, ausgewählt ist, und
die basische Substanz eine Struktur aufweist, die aus den Gruppen von Verbindungen mit niedrigem Molekulargewicht und Verbindungen mit hohem Molekulargewicht mit einer Mehrzahl an basischen funktionellen Gruppen ausgewählt ist.

3. Die oberflächenmodifizierte Nanofaser nach Anspruch 2, welche **dadurch gekennzeichnet ist, dass** die saure funktionelle Gruppe, die Protonenleitfähigkeit aufweist, eine Sulfonsäuregruppe, eine Phosphonsäuregruppe oder eine Carbonsäuregruppe ist und die basische funktionelle Gruppe eine Gruppe mit einem tertiären Stickstoff, einem quaternären Stickstoff, einem quaternären Phosphor oder einem quaternären Schwefel ist, wobei die quaternäre schwefelhaltige Gruppe eine Sulfoniumgruppe ist.

4. Die oberflächenmodifizierte Nanofaser nach Anspruch 3, welche **dadurch gekennzeichnet ist, dass** die tertiäre stickstoffhaltige Gruppe ein Aminderivat, ein Pyridinderivat oder ein Imidazolderivat ist, die quaternäre stickstoffhaltige Gruppe eine Ammoniumgruppe, eine Pyridiniumgruppe oder eine Imidazoliumgruppe ist und die quaternäre phosphorhaltige Gruppe eine Phosphoniumgruppe ist.

5. Die oberflächenmodifizierte Nanofaser nach einem der Ansprüche 1 bis 4, welche **dadurch gekennzeichnet ist, dass**

die molekulare Modifikationsstelle auf der Oberfläche in einem Anteil von 5 bis 90 Massen-% in der gesamten oberflächenmodifizierten Nanofaser vorliegt und
die oberflächenmodifizierte Nanofaser einen Faserdurchmesser von 1000 nm oder weniger aufweist, wobei der Faserdurchmesser wie in der Beschreibung beschrieben gemessen wird.

6. Eine Elektrolytmembran, die die oberflächenmodifizierte Nanofaser nach einem der Ansprüche 1 bis 5 enthält und **dadurch gekennzeichnet ist, dass**

die oberflächenmodifizierte Nanofaser in einem Anteil von 10 bis 90 Massen-% in der gesamten Elektrolytmembran vorliegt und
eine Dicke von 30 μm oder weniger aufweist.

7. Ein Verfahren zur Herstellung einer Elektrolytmembran nach Anspruch 6, wobei das Verfahren

einen Schritt zur Bildung eines Vliesstoffs, der eine Polymer-Nanofaser umfasst,
einen Schritt, bei dem der Vliesstoff einer Oberflächenmodifizierungsbehandlung unterzogen wird, um einen Vliesstoff zu erhalten, der oberflächenmodifizierte Nanofasern umfasst, indem die Oberflächenmodifizierungsbehandlung wiederholt abwechselnd mit einer sauren Substanz und einer basischen Substanz durchgeführt wird, wobei molekulare Modifikationsstellen als eine gewünschte Anzahl an Schichten gebildet werden,
einen Schritt zum Integrieren der oberflächenmodifizierten Nanofaser und eines Matrixpolymers durch Füllen der Poren des Vliesstoffs mit dem Matrixpolymer, um einen mit Matrixpolymer gefüllten Vliesstoff zu erhalten, und
einen Schritt, bei dem der erhaltene mit Matrixpolymer gefüllte Vliesstoff einer Nachbehandlung unterzogen wird, beinhaltet.

8. Eine Membranelektrodenanordnung für eine Festpolymerbrennstoffzelle, welche **dadurch gekennzeichnet ist, dass** sie die Elektrolytmembran nach Anspruch 6 enthält.

9. Eine Festpolymerbrennstoffzelle, welche **dadurch gekennzeichnet ist, dass** sie die Membranelektrodenanordnung nach Anspruch 8 enthält.

## Revendications

1. Nanofibre modifiée en surface comprenant :

un site de modification moléculaire sur la surface d'une nanofibre de polymère,
et **caractérisée en ce que**

le site de modification moléculaire présente une conductivité protonique et
le site de modification moléculaire a les caractéristiques A), B) et C) ci-dessous,

A) le site de modification moléculaire a un groupe fonctionnel qui peut interagir avec une nanofibre de polymère ;
B) le site de modification moléculaire est composé à partir d'une substance acide et d'une substance basique ;
C) la substance acide et la substance basique comprennent une structure stratifiée alternée.

**2.** Nanofibre modifiée en surface selon la revendication 1, **caractérisée en ce que**

la substance acide a une structure choisie dans l'ensemble des composés de faible masse moléculaire et des composés de masse moléculaire élevée ayant une pluralité de groupes fonctionnels acides qui présentent une conductivité protonique, et
la substance basique a une structure choisie dans l'ensemble des composés de faible masse moléculaire et des composés de masse moléculaire élevée ayant une pluralité de groupes fonctionnels basiques.

**3.** Nanofibre modifiée en surface selon la revendication 2, **caractérisée en ce que**

le groupe fonctionnel acide, qui présente une conductivité protonique, est un groupe acide sulfonique, un groupe acide phosphonique ou un groupe acide carboxylique, et
le groupe fonctionnel basique est un groupe ayant un azote tertiaire, un azote quaternaire, un phosphore quaternaire ou un soufre quaternaire, dans lequel le groupe contenant un soufre quaternaire est un groupe sulfonium.

**4.** Nanofibre modifiée en surface selon la revendication 3, **caractérisée en ce que** le groupe contenant un azote tertiaire est un dérivé d'amine, un dérivé de pyridine ou un dérivé d'imidazole, le groupe contenant un azote quaternaire est un groupe ammonium, un groupe pyridinium ou un groupe imidazolium, et le groupe contenant un phosphore quaternaire est un groupe phosphonium.

**5.** Nanofibre modifiée en surface selon l'une quelconque des revendications 1 à 4, **caractérisée en ce que**

le site de modification moléculaire sur la surface est présent en une proportion de 5 à 90 % en masse dans la nanofibre modifiée en surface totale, et
la nanofibre modifiée en surface a un diamètre de fibre de 1000 nm ou moins, lequel diamètre de fibre est mesuré comme décrit dans la description.

**6.** Membrane électrolyte qui contient la nanofibre modifiée en surface selon l'une quelconque des revendications 1 à 5, et **caractérisée en ce que**

la nanofibre modifiée en surface est présente dans un rapport de 10 à 90 % en masse dans la membrane électrolyte totale, et
a une épaisseur de 30 $\mu$m ou moins.

**7.** Méthode pour produire une membrane électrolyte de la revendication 6, la méthode comprenant

une étape pour former une étoffe non tissée comprenant une nanofibre de polymère, une étape pour soumettre l'étoffe non tissée à un traitement de modification de surface pour que soit obtenue une étoffe non tissée comprenant des nanofibres modifiées en surface par mise en oeuvre répétée du traitement de modification de surface alternativement avec une substance acide et une substance basique, en formant ainsi des sites de modification moléculaire sous la forme d'un nombre souhaité de couches,
une étape pour intégrer la nanofibre modifiée en surface et un polymère de matrice par remplissage des pores de l'étoffe non tissée avec le polymère de matrice pour que soit obtenue une étoffe non tissée remplie de polymère de matrice, et
une étape pour soumettre l'étoffe non tissée remplie de polymère de matrice à un post-traitement.

**8.** Assemblage de membrane-électrodes pour une pile à combustible à polymère solide, **caractérisé en ce qu'**il contient la membrane électrolyte de la revendication 6.

9. Pile à combustible à polymère solide, **caractérisée en ce qu'**elle contient l'assemblage de membrane-électrodes de la revendication 8.

Fig 1

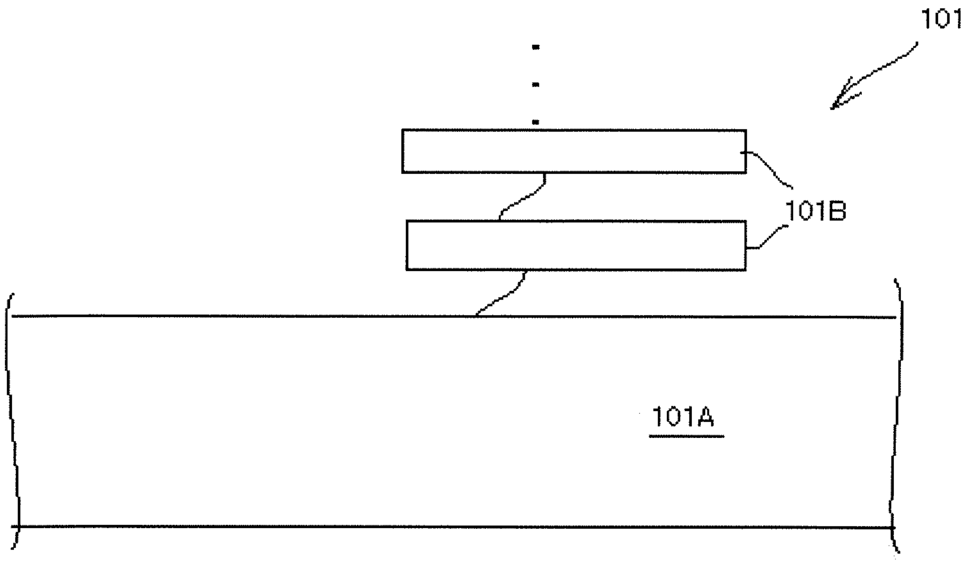


Fig 2

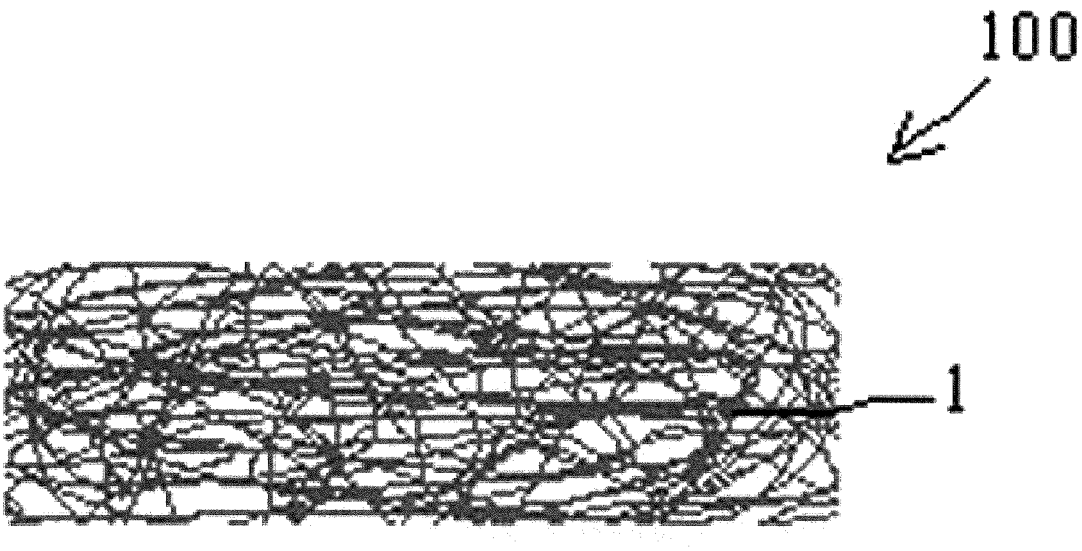

Fig 3

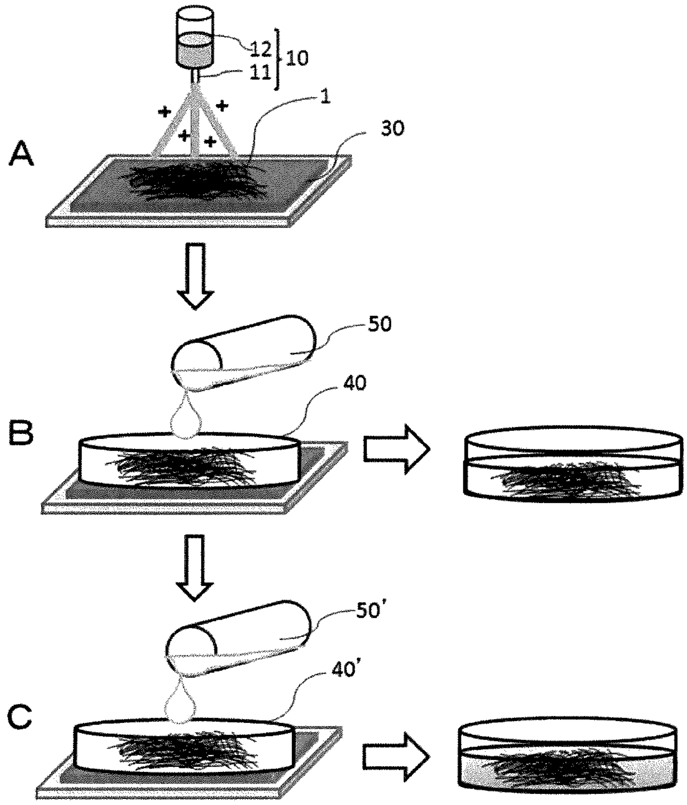


Fig 4

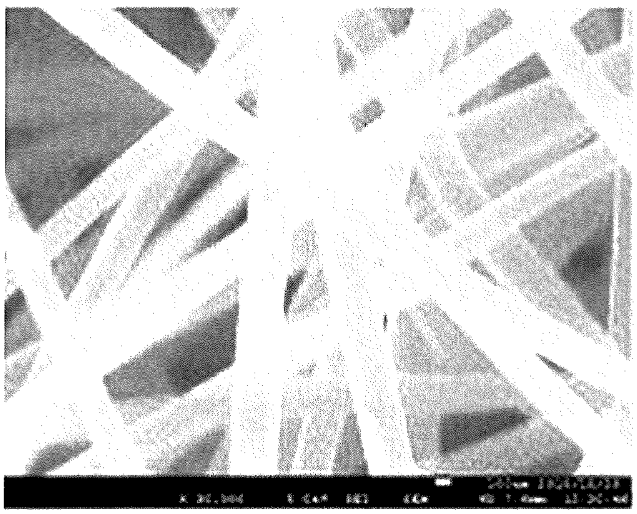

A SEM image of the PBI nano-fiber obtained in example 1

Fig 5

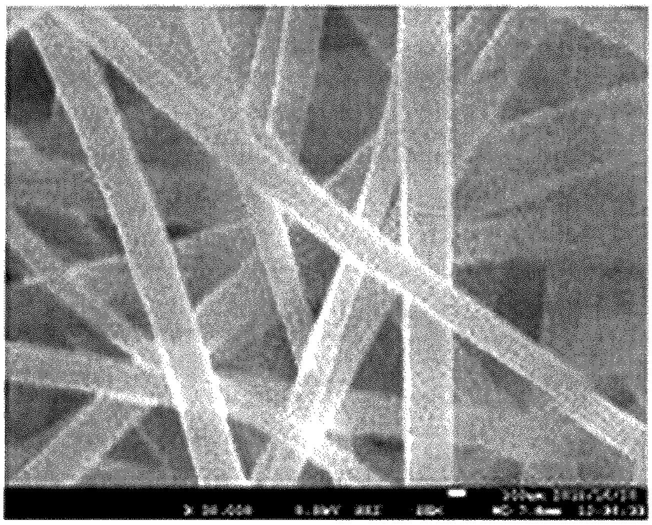

A SEM image of the PBI nano-fiber modified single layer with acidic substance obtained in example 2

Fig 6

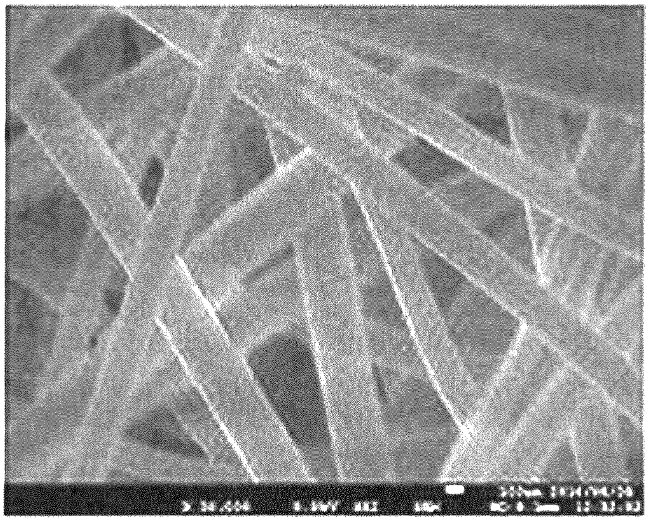

A SEM image of the PBI nano-fiber modified three layers alternately with acidic substance and basic substance obtained in example 3

Fig 7

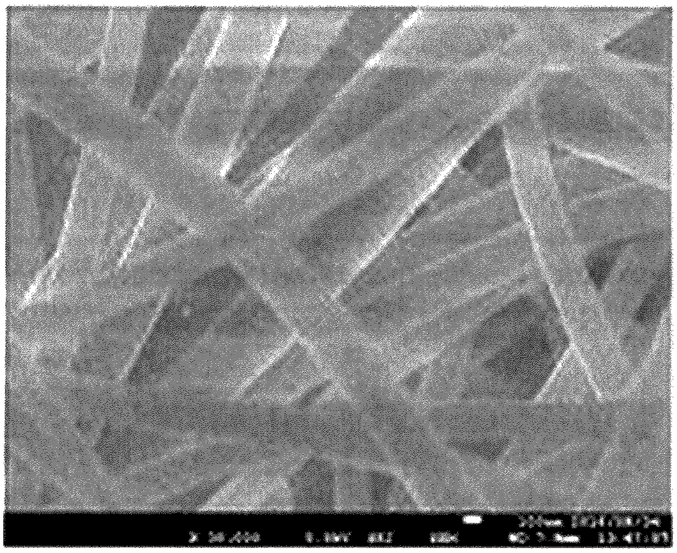

A SEM image of the PBI nano-fiber modified five layers alternately with acidic substance and basic substance obtained in example 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002358978 A
- JP 2005232236 A
- JP 2005272666 A
- JP 2007302741 A
- JP 2011068872 A
- JP 2012238590 A
- JP 2015028850 A
- TW 201011963 A
- JP 2013237942 A
- JP 2003073964 A
- JP 2004238749 A
- JP 2005194675 A